# EUROPÄISCHE PATENTSCHRIFT

(11) **EP 3 359 841 B1**
(45) Veröffentlichungstag und Bekanntmachung des Hinweises auf die Patenterteilung: **18.12.2019**
(21) Anmeldenummer: 16778405.7
(22) Anmeldetag: 10.10.2016
(51) Int. Cl.: F16D 65/095, F16D 65/092, F16D 65/00, F16D 55/224, F16D 55/00

(54) **BREMSTRÄGER**
BRAKE CARRIER
FLASQUE DE FREIN

(30) Priorität: 09.10.2015 DE 102015117285; 17.03.2016 DE 102016104967
(43) Veröffentlichungstag der Anmeldung: 15.08.2018
(73) Patentinhaber: KNORR-BREMSE Systeme für Nutzfahrzeuge GmbH, 80809 München (DE)
(72) Erfinder: ADAMCZYK, Philipp, 87677 Stöttwang (DE); KLINGNER, Matthias, 82272 Moorenweis (DE); HASSANI, Akbar, 81247 München (DE)
(86) Internationale Anmeldenummer: PCT/EP2016/074155
(87) Internationale Veröffentlichungsnummer: WO 2017/060513

(56) Entgegenhaltungen:
- WO-A1-2008/079086
- DE-A1-102013 016 312
- DE-A1-102013 110 159
- US-A1- 2012 222 925

## Beschreibung

Die vorliegende Erfindung betrifft einen Bremsträger für eine Scheibenbremse nach dem Oberbegriff des Anspruchs 1.

Gattungsgemäße Bremsträger für Scheibenbremsen werden einstückig vorzugsweise durch ein Urformverfahren hergestellt, vorzugsweise im Sandgießverfahren, wobei als Werkstoff vorzugsweise Gusseisen mit Kugelgraphit bzw. Sphäroguss eingesetzt wird. Das so entstandene Gussrohteil wird anschließend teilweise spanend fertig bearbeitet, so dass ein einbaubarer Bremsträger entsteht. Derartige einstückige Bremsträger haben sich grundsätzlich bewährt, sind aber noch weiter zu entwickeln. So weisen die Bremsträger nach dem Stand der Technik auf Grund der Festigkeitsanforderungen an den Bremsträger sowie auf Grund eines beengten Bauraumes für den Bremsträger und der daraus resultierenden, bisherigen geometrischen Gestaltung ein relativ hohes Gewicht auf, das weiteres Optimierungspotential bieten sollte.

In der DE 10 2013 110 159 A1 wird ein Bremsträger (siehe Fig. 16) beschrieben, der zumindest auf einer befestigungsflanschabgewandten Seite in Bezug auf einen Scheibenumgriff nach außen hin eine in Bezug auf eine Bremsscheibendrehachse in axialer Richtung vom Bremsträger vorstehende bzw. erhabene Vesteifungsrippe aufweist. Die Versteifungsrippe ist als durchgehender Konturzug ausgebildet. Der durchgehende Konturzug weist jeweils einen von zwei äußeren Enden zu einer mittigen Symmetrieachse hin vorzugsweise stetig steigenden Verlauf auf. Der in der DE 10 2013 110 159 A1 beschriebene Bremsträger weist zwar bereits ein relativ geringes Gewicht auf. Dennoch ist es wünschenswert - insbesondere auch im Hinblick auf eine weitere Nutzlastoptimierung eines Nutzfahrzeuges - einen gegenüber dem Stand der Technik weiter gewichts- und damit auch kostenoptimierten Bremsträger insbesondere für Nutzfahrzeugbremsen bereitzustellen.

Ein gattungsgemäßer Bremsträger ist zudem aus der WO 2008/079086 A1 bekannt.

Der Erfindung liegt daher die Aufgabe zu Grunde, einen verbesserten Bremsträger mit einem niedrigen Gewicht und gleichzeitiger verbesserter Spannungsverteilung zu schaffen.

Die Erfindung löst diese Aufgabe durch den Gegenstand des Anspruchs 1. Ferner schafft die Erfindung eine Scheibenbremse nach dem Anspruch 24.

Nach dem Gegenstand des Anspruchs 1 wird der Scheibenumgriff des Bremsträgers auf seiner in Bezug auf die Bremsscheibe radialen Außenseite - also den jeweiligen Rahmenabschnitt des Bremsträgers- so gestaltet, dass wenig Werkstoff verwendet wird, der Bremsträger jedoch trotzdem eine ausreichende Steifigkeit aufweist. Durch die jeweils ganz oder jedenfalls im Wesentlichen dreieckförmige Gestaltung des Rahmenabschnitts wird dabei ein niedriges Gewicht erreicht.

Es verbreitern sich beide der Rahmenabschnitte derart, dass jeweils ausgehend von der befestigungsflanschabgewandten Seite des Scheibenumgriffs jeweils bis zu einem Außenrand des Befestigungsflansches des Bremsträgers ein Geometrieelement gebildet ist. Dabei ist das Geometrieelement dreieckförmig, wobei die befestigungsflanschzugewandte Seite des Rahmenabschnitts jeweils eine kürzeste Seite des dreieckförmigen Geometrieelementes bildet. Durch die jeweils dreieckförmige Gestaltung des Rahmenabschnitts wird in vorteilhafter Weise Gewicht eingespart. Durch die Gestaltung des jeweiligen Rahmenabschnitts derart, dass die befestigungsflanschzugewandete Seite des Rahmenabschnitts jeweils die kürzeste Seite des Dreiecks bildet, wird vorteilhaft an dieser die Steifigkeit des Bremsträgers nicht reduziert, während auf der befestigungsflanschabgewandten Seite des Rahmenabschnitts durch die dreieckförmige Gestaltung des Rahmenabschnitts vorteilhaft Gewicht eingespart werden kann, da die Aussteifung des Bauteils an dieser Seite durch andere Geometrieelemente des Bremsträgers übernommen wird.

Oder das Geometrieelement kann trapezförmig sein, wobei die befestigungsflanschzugewandte Seite des Rahmenabschnitts jeweils eine lange Grundseite des trapezförmigen Geometrieelementes bildet. Sowohl bei dem dreieckförmigen als auch bei dem trapezförimigen Geometrieeelement ist es vorgesehen, dass einer oder beide der Rahmenabschnitte einen geradlinig verlaufenden unteren Rand ohne Absätze aufweist/aufweisen. Dadurch kann eine Spannungsverteilung auf den Rahmenabschnitten einschließlich einer Gewichtsreduktion gleichmäßig erfolgen.

In einer weiteren bevorzugten Variante kann der Bremsträger jeweils zwei Trägerhörner auf einer befestigungsflanschabgewandten Seite des Bremsträgers aufweisen und jeweils zwei Trägerhörner auf einer befestigungsflanschzugewandten Seite des Bremsträgers. Die beiden Trägerhörner auf der befestigungsflanschzugewandten Seite des Bremträgers weisen jeweils vorzugsweise einen L-förmigen Querschnitt auf. Durch den L-förmigen Querschnitt erhalten die Trägerhörner auf der befestigungsflanschzugewandten Seite des Bremträgers in vorteilhafter Weise eine belastungsgerechte Geometrie bei optimaler Werkstoffausnutzung.

So können in einer Ausführung beide Schenkel des jeweils L-förmigen Querschnitts der Trägerhörner dicker gestaltet sein als die Trägerhörner auf der befestigungsflanschabgewandten Seite des Bremsträgers.

Vorzugsweise weist der Bremsträger eine Verstärkungsrippe, die einen mittleren, gebogenen Rippenabschnitt und zwei geradlinig verlaufende Rippenabschnitte umfasst und einen geschlossenen Konturzug aufweist, auf seiner befestigungsflanschabgewandten Außenseite auf. Die Verstärkungsrippe steift so in vorteilhafter Weise die befestigungsflanschabgewandte Seite des Bremsträgers aus.

Es ist in einer weiteren Ausführung vorgesehen, dass der Konturzug der Verstärkungsrippe jeweils an zwei Enden an dem Rahmenabschnitt des Bremsträgers mit jeweils einem geradlinig verlaufenden Rippenabschnitt beginnt und jeweils zunächst parallel unter einer Ebene oder in der Ebene einer Grundfläche des Scheibenumgriffs verläuft und dann mit dem mittleren Rippenabschnitt der Brückenstrebe an deren befestigungsflanschabgewandter Seite bzw. Außenseite folgt und bis zu einer Symmetrieebene "S" des Bremsträgers verläuft. Es kann sich somit eine gleichmäßige Verstärkung und Spannungsverteilung ergeben.

In einer noch weiteren Ausführung erstreckt sich der mittlere gebogene Rippenabschnitt der Verstärkungsrippe zwischen den den Trägerhörnern zugewandten Seiten des Scheibenumgriffs im Bereich eines Achsübergriffs bogenförmig, insbesondere kreisbogenförmig, was ebenfalls eine gleichmäßige Spannungsverteilung und Verstärkung bewirken kann.

Eine weitere Verbesserung der Gleichmäßigkeit von Spannungsverteilung und Verstärkung kann dadurch erfolgen, dass die Verstärkungsrippe zu der Symmetrieebene "S" spiegelsymmetrisch ausgebildet ist.

Dazu kann die Verstärkungsrippe auch derart positioniert sein, dass sie oberhalb von Befestigungsstellen des Bremsträgers angeordnet ist.

Es ist vorteilhaft, wenn der Bremsträger Taschen aufweist. Durch die Wandstärkenreduzierung im Bereich der Taschen wird vorteilhaft Werkstoff und damit Gewicht gespart. In einer Ausführung können diese Taschen auf der bremsscheibenzugewandten Seite der befestigungsflanschzugewandten Seite des Scheibenumgriffs unterhalb von Trägerhörnern im Bereich der Befestigungsstellen angeordnet sein. Dadurch können sich auch weitere Vorteile hinsichtlich eines Schwingungsverhaltens ergeben.

Nach einer anderen bevorzugten Ausführungsform weist der Bremsträger einen oder mehrere Durchbrüche auf. Die Durchbrüche sind vorteilhaft an Stellen des Bremsträgers mit niedriger Verformung und damit niedriger mechanischer Spannung angeordnet und wirken vorteilhaft gewichtsreduzierend, ohne die mechanische Spannung im Bremsträger im Bereich der Durchbrüche durch Kerbwirkung zu erhöhen. Darüber hinaus dienen die Durchbrüche vorteilhaft zur Wärmeabfuhr von den Bremsbelägen und von der Bremsscheibe an die Umgebung. Zudem kann sich damit ein Schwerpunkt des Bremsträgers weiter nach innen verschieben, wodurch eine Eigenfrequenz des Bremsträgers zur Verbesserung eines NVH-Verhaltens (Noise, Vibration, Harshness) angehoben werden kann. Hierzu können in einer weiteren Ausführung die beiden Durchbrüche spiegelsymmetrisch zu der Symmetrieebene "S" angeordnet werden, worduch eine Gleichmäßigkeit der Reduktion des NVH-Verhaltens erhöht werden kann.

In einer weiteren bevorzugten Ausführungsform der Erfindung ist eine lichte Weite "W₁" des Bremsbelagschachtes, den die befestigungsflanschabgewandt angeordneten Trägerhörner ausformen, größer ist als eine lichte Weite "W₂" des Bremsbelagschachtes, den die befestigungsflanschzugewandt angeordneten Trägerhörner bilden. Durch die reduzierte lichte Weite "W₂" des befestigungsflanschzugewandt angeordneten Bremsbelagschachtes wird die Steifigkeit auf der befestigungsflanschzugewandten Seite des Bremsträgers vorteilhaft erhöht und damit die mechanischen Spannungen in diesem Bereich des Bremsträgers ebenfalls vorteilhaft reduziert. Dadurch können Wandstärken entsprechend reduziert und vorteilhaft Gewicht gespart werden.

Eine andere Ausführung des Bremsträgers kann mit seinen Varianten eine eigenständige Erfindung sein oder in Kombination mit dem oben hier beschriebenen Ausführungsbeispiel ausgebildet sein.

In einer Ausführung ist zumindest eine der zueinander parallelen Brückenstreben mit zumindest einer um einen Winkel gekippten Seite versehen. Hiermit kann der Vorteil erreicht werden, dass lokale Spannungen reduziert werden, da die Spannungen flächig über die Brückenstrebe verteilt werden.

In einer Ausführung ist dazu vorgesehen, dass die befestigungsflanschzugewandte Brückenstrebe mit der zumindest einen um einen Winkel gekippten Seite versehen ist.

Bevorzugt ist dabei in einer Ausführung, dass eine Oberseite der befestigungsflanschzugewandten Brückenstrebe in einem Winkel zu einer gedachten waagerechten Ebene, welche parallel zu einer Ebene des Scheibenumgriffs liegt, gekippt ist.

Alternativ oder zusätzlich kenn auch eine Unterseite der befestigungsflanschzugewandten Brückenstrebe in einem Winkel zu einer gedachten waagerechten Ebene, welche parallel zu einer Ebene des Scheibenumgriffs liegt, gekippt sein.

Es ist in einer Ausführung vorgesehen, dass der Winkel einen Wert aufweist, welcher in einem Bereich von etwa 1° bis 20°, bevorzugt 5° bis 12° liegt.

Alternativ kann ein Wert des Winkels auch über die Länge der befestigungsflanschzugewandten Brückenstrebe veränderlich sein.

Der Wert des Winkels ist dabei so gewählt, dass im Bereich der Spannungskonzentrationen Material entfernt bzw. eingespart werden kann. Dadurch wird auch ein Gewicht des Bremsträgers vorteilhaft verringert, wobei gleichzeitig ein NSH-Verhalten positiv beeinflusst werden kann.

Eine weitere Ausführung sieht dazu vor, dass zumindest eine der zueinander parallelen Brückenstreben zumindest eine Einschnürung aufweist, welche schon bei der Fertigung oder auch nachträglich eingeformt werden kann.

Eine Scheibenbremse eines Fahrzeugs weist den oben beschriebenen Bremsträger auf. Dadurch wird das Gesamtgewicht der Scheibenbremse gering gehalten.

Weitere vorteilhafte Varianten sind den übrigen Unteransprüchen zu entnehmen.

Ausführungsbeispiele eines erfindungsgemäßen Bremsträgers sind in den Zeichnungen dargestellt und werden im Folgenden näher beschrieben. Es zeigen:
- Fig. 1:: eine räumlich-isometrische Darstellung eines ersten Ausführungsbeispiels eines erfindungsgemäßen Bremsträgers;
- Fig. 2:: eine Vorderansicht des erfindungsgemäßen Bremsträgers aus Fig. 1;
- Fig. 3:: eine Seitenansicht von links des erfindungsgemäßen Bremsträgers aus Fig. 2;
- Fig. 4:: eine räumlich-dimetrische Darstellung des erfindungsgemäßen Bremsträgers aus Fig. 1;
- Fig. 5:: eine Draufsicht des erfindungsgemäßen Bremsträgers aus Fig. 1 oder 2;
- Fig. 6:: eine Scheibenbremse, in die ein erfindungsgemäßer Bremsträger nach Fig. 1 eingebaut ist;
- Fig. 7: eine Draufsicht auf ein zweites Ausführungsbeispiel des erfindungsgemäßen Bremsträgers;
- Fig. 7a: eine schematische Querschnittdarstellung einer Brückenstrebe;
- Fig. 8-10: Schnittdarstellungen des zweiten Ausführungsbeispiels des erfindungsgemäßen Bremsträgers nach Fig. 7;
- Fig. 11: eine Draufsicht auf eine Variante des zweiten Ausführungsbeispiels des erfindungsgemäßen Bremsträgers nach Fig. 7;
- Fig. 11a: eine weitere schematische Querschnittdarstellung der Brückenstrebe;
- Fig. 12-14: Schnittdarstellungen der Variante des zweiten Ausführungsbeispiels des erfindungsgemäßen Bremsträgers nach Fig. 11;
- Fig. 12a-12c, 13a-13c, 14a-14c: weitere Schnittdarstellungen der Variante des zweiten Ausführungsbeispiels des erfindungsgemäßen Bremsträgers nach Fig. 11;
- Fig. 15:: eine räumliche Darstellung eines Bremsträgers nach einem älteren Stand der Technik;
- Fig. 16:: eine räumliche Darstellung eines Bremsträgers nach dem in der DE 10 2013 110 159 A1 beschriebenen Stand der Technik.

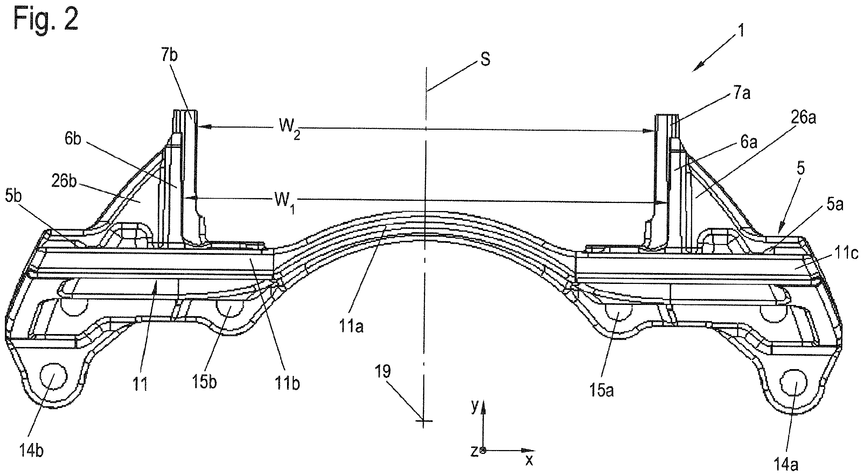

Nachfolgend werden Begriffe wie "oben", "unten", "rechts", "links" usw. verwendet, welche sich auf die Ausrichtung des Bremsträgers entsprechend zu **Fig. 2** beziehen. Ein kartesisches Koordinatensystem in den Figuren dient der weiteren Orientierung.

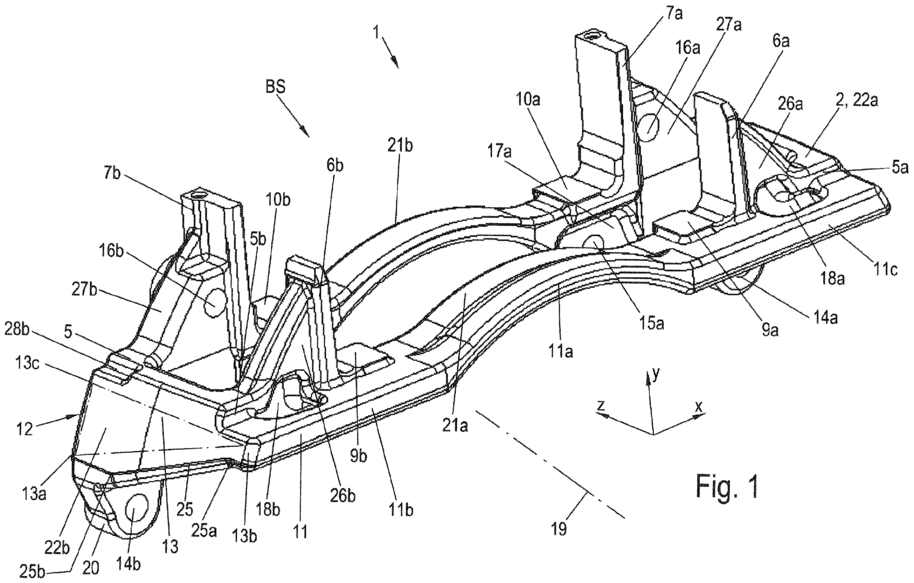

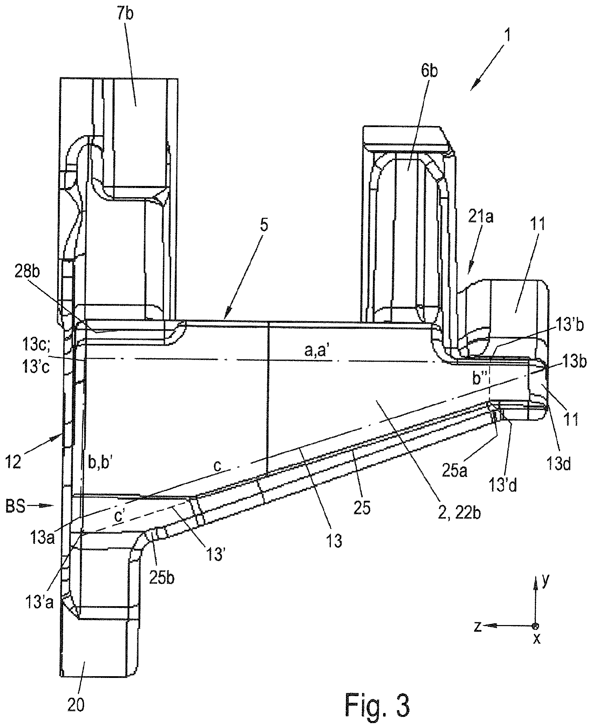

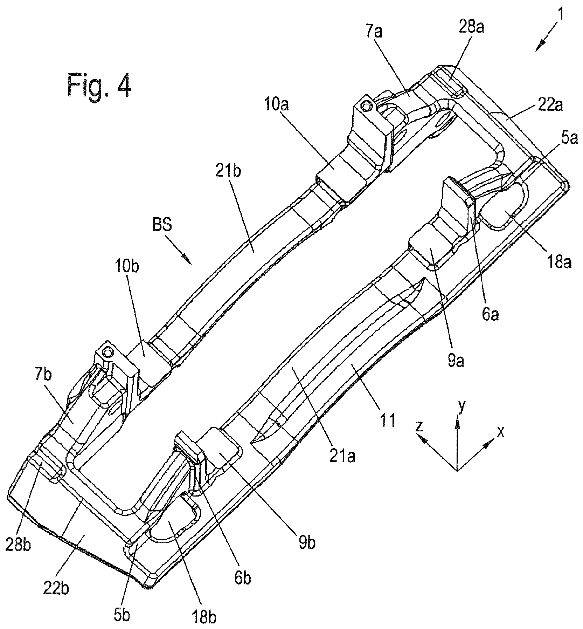

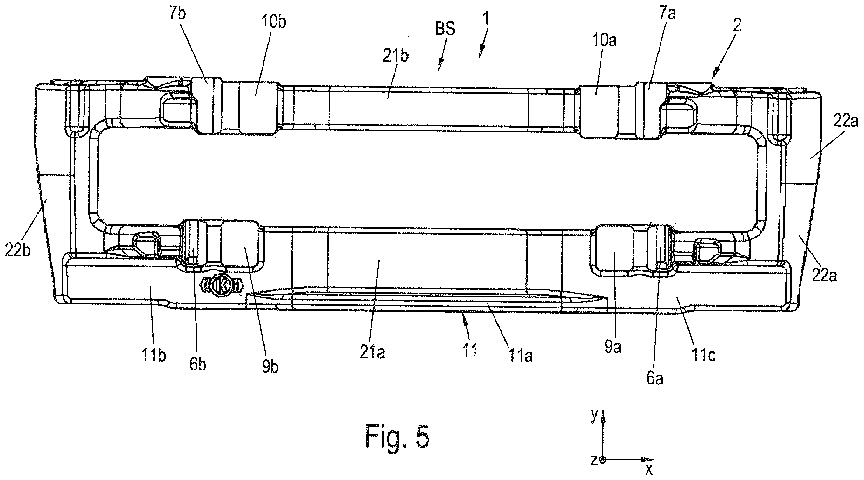

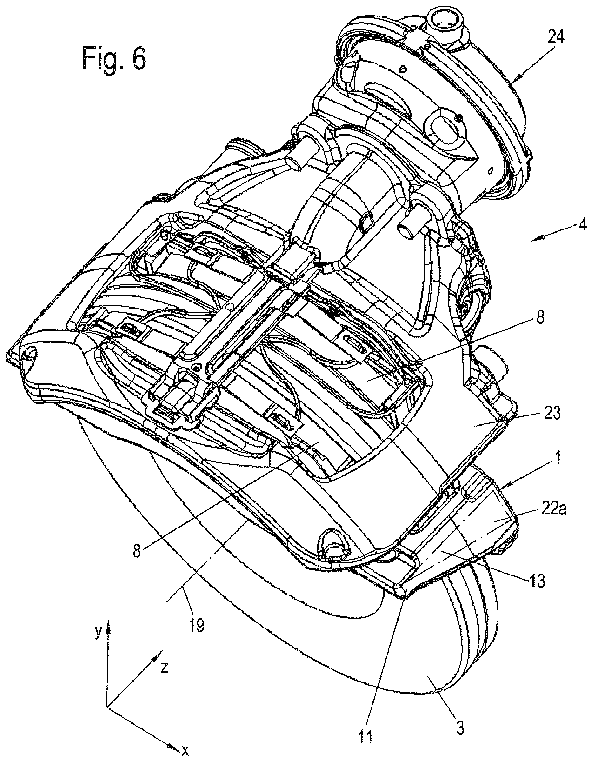

In **Fig. 1** ist eine räumlich-isometrische Darstellung eines Ausführungsbeispiels eines erfindungsgemäßen Bremsträgers 1 dargestellt. **Fig. 2** zeigt eine Vorderansicht des Bremsträgers 1 aus Fig. 1. In **Fig. 3** ist eine Seitenansicht des Bremsträgers 1 aus **Fig. 2** von links in x-Richtung gesehen dargestellt. Eine räumlich-dimetrische Darstellung des Bremsträgers 1 aus Fig. 1 zeigt **Fig. 4****.** In **Fig. 5** ist eine Draufsicht des erfindungsgemäßen Bremsträgers aus Fig. 1 oder 2 dargestellt. **Fig. 6** zeigt eine Scheibenbremse 4, in die der Bremsträger nach Fig. 1 eingebaut ist.

Der Bremsträger 1 ist vorzugsweise einstückig ausgebildet. Er ist vorzugsweise durch ein Urformverfahren hergestellt, besonders bevorzugt durch Gießen, wobei bevorzugt eine duktile Gusseisensorte, besonders bevorzugt Gusseisen mit Kugelgraphit, verwendet ist.

Der Bremsträger 1 überspannt bzw. umgreift rahmenartig als ein so genannter Scheibenumgriff 2 bzw. Scheibenrahmen einen in Bezug auf eine Fahrzeug-Radachse / Bremsscheibendrehachse 19 radial äußeren Abschnitt einer drehfest mit einer Fahrzeugachse verbundenen Bremsscheibe 3 der Scheibenbremse 4 (siehe dazu Fig. 6). Der Scheibenumgriff 2 liegt in einer x-z-Ebene unterhalb einer im Weiteren noch näher beschriebenen Grundfläche 5 des Bremsträgers 1. Eine Ebene des Scheibenumgriffs 2 ist somit eine Ebene parallel zur Grundfläche 5. Der Scheibenumgriff 2 umfasst zwei zueinander parallele Brückenstreben 21a, 21b und zwei parallel zu einer Bremsscheibendrehachse 19 angeordnete Rahmenabschnitte 22a, 22b, welche die Brückenstreben 21a, 21b an ihren Enden jeweils untereinander verbinden.

Parallel bzw. in axialer Richtung zur Bremsscheibe 3 beabstandet, ist beidseits zu der Bremsscheibe 3 jeweils eine der Brückenstreben 21a, 21b angordnet.

Die Brückenstreben 21a, 21b weisen eine im Wesentlichen geradlinige Form auf, die im Bereich des Achsübergriffs bzw. Nabenübergriffs diesen bogenförmig überspannt. So werden die Brückenstreben 21a, 21b umgangssprachlich auch jeweils als bogenartiger Nabenschwung 21a, 21b bezeichnet. Die beiden Brückenstreben 21a, 21b sind parallel zur Bremsscheibendrehachse 19 bzw. in radialer Richtung zur Bremsscheibe 3 beabstandet über Rahmenabschnitte 22a, 22b miteinander zum Scheibenumgriff 2 verbunden.

Die eine der Brückenstreben 21b liegt auf einer Befestigungsseite BS des Bremsträgers 1, an der der Bremsträger 1 einen Befestigungsflansch 20 aufweist, der an einem Achsflansch befestigt werden kann. Diese Seite des Bremsträgers 1 wird im Weiteren befestigungsflanschzugewandte Seite genannt, wohingegen die andere Seite des Bremsträgers 1 als befestigungsflanschabgewandte Seite bezeichnet wird. Demgemäß wird die auf der Befestigungsseite BS angeordnete Brückenstrebe 21b befestigungsflanschzugewandte Brückenstrebe 21b genannt, wobei die andere Brückenstrebe 21a als befestigungsflanschabgewandte Brückenstrebe 21a bezeichnet wird. Der Achsflansch ist jeweils an einem Ende einer Fahrzeugachse angeordnet. Der Befestigungsflansch 20 des Bremsträgers 1 wird demnach an der Fahrzeugachse stabilisiert.

Der Bremsträger 1 weist ferner auf jeder Seite der Bremsscheibe 3 zwei Trägerhörner 6a, 6b bzw. 7a, 7b mit jeweiligen Stützwänden 26a, 26b und 27a, 27b auf. Insgesamt gibt es daher vier der Trägerhörner 6a, 6b bzw. 7a, 7b. Sie sind mit dem Scheibenumgriff 2 einstückig ausgebildet. Die Trägerhörner 6a, 6b, welche auf der befestigungsflanschabgewandten Seite des Bremsträgers 1 angeordnet sind, werden auch als außenliegende Trägerhörner 6a, 6b bezeichnet, wohingegen die auf der befestigungsflanschzugewandten Seite des Bremsträgers 1 angeordneten Trägerhörner 7a, 7b innenliegende Trägerhörner genannt werden.

Die Trägerhörner 6a, 6b und 7a, 7b erstrecken sich von den Rahmenabschnitten 22a, 22b ausgehend von einer der definitionsgemäß als Grundfläche 5 bezeichneten Fläche bzw. Ebene nach oben in positiver y-Richtung. Diese Grundfläche 5 liegt hier in einer x-z-Ebene und somit rechtwinklig zu einer Ebene der Bremsscheibe 3. Die Trägerhörner 6a, 6b sowie 7a, 7b sind hier vorzugsweise symmetrisch zu jeweils einer der Brückenstreben 21a, 21b angeordnet und liegen ferner vorzugsweise in einer Ebene parallel zur Reibfläche bzw. einer Ebene der Bremsscheibe 3 in Umfangrichtung hintereinander. Die Trägerhörner 6a, 6b und 7a, 7b dienen zur Abstützung und Führung von Bremsbelägen 8 der Scheibenbremse 4 (siehe dazu Fig. 6).

Die beiden innenliegenden Trägerhörner 7a, 7b weisen jeweils einen L-förmigen Querschnitt auf. Zudem weisen vorzugsweise auch die beiden außenliegenden Trägerhörner 6a, 6b jeweils einen L-förmigen Querschnitt auf. Das "L"ist jeweils in Richtung der (hier nicht dargestellten) Bremsbeläge ausgerichtet, um Stützstellen in Radialrichtung und in Umfangsrichtung für diese Bremsbeläge auszubilden.

An den in die Grundfläche 5 übergehenden Enden der innenliegenden Stützwände 27a und 27b ist jeweils eine längliche Ausnehmung 28a, 28b eingeformt, die sich in z-Richtung im Wesentlichen über die gesamte Breite, d.h. in z-Richtung, der jeweiligen Stützwand 27a, 27b erstreckt. Diese Ausnehmungen können zur Gewichtseinsparung und Verbesserung eines NVH-Verhaltens (Noise, Vibration, Harshness) dienen.

In Fig. 1 ist gut erkennbar dargestellt, dass beide Schenkel des jeweils L-förmigen Querschnitts der innenliegenden Trägerhörner 7a, 7b breiter, dicker und höher gestaltet sind als die Schenkel der außenliegenden Trägerhörner 6a, 6b. Durch den L-förmigen Querschnitt erhalten die innenliegenden Trägerhörner 7a, 7b in vorteilhafter Weise eine belastungsgerechte Geometrie bei optimaler Werkstoffausnutzung.

Die Trägerhörner 6a, 6b bzw. 7a, 7b bilden mit unteren Stützstellen 9a, 9b bzw. 10a, 10b des Bremsträgers 1 jeweils einen von zwei Bremsbelagschächten aus, die jeweils eine Belagträgerplatte eines Bremsbelags 8 (siehe Fig. 6) in Umfangsrichtung, d.h. einlaufseitig und auslaufseitig sowie nach unten hin führen bzw. abstützen.

Die befestigungsflanschabgewandte Brückenstrebe 21a ist auf ihrer nach außen, d.h. in negativer z-Richung, weisenden Längsseite durch eine Verstärkungsrippe 11 derart verbreitert, dass eine Breite der befestigungsflanschabgewandte Brückenstrebe 21a in Richtung der Bremsscheibendrehachse 19 bzw. in negativer z-Richtung vergrößert ist. Auf diese Weise geht der Scheibenumgriff 2 direkt in die Verstärkungsrippe 11 über.

Diese Verstärkungsrippe 11 umfasst einen mittleren, gebogenen, in Bezug auf die Bremsscheibendrehachse 19 konvexen Rippenabschnitt 11a und zwei in Richtung der x-Achse im Wesentlichen geradlinig verlaufende Rippenabschnitte 11b und 11c. Jedes Ende des mittleren Rippenabschnitts 11a ist jeweils mit einem der geradlinig verlaufenden Rippenabschnitte 11b, 11c verbunden. Daraus ergibt sich ein geschlossener Konturzug der Verstärkungsrippe 11, welcher unten noch näher erläutert wird.

Die Rahmenabschnitte 22a, 22b verbinden jeweils die Enden der Brückenstreben 21a, 21b in der Ebene des Scheibenumgriffs 2. Dabei ist ein befestigungsflanschabgewandtes Ende eines jeweiligen Rahmenabschnitts 22 an einer befestigungsflanschabgewandten Seite des Scheibenumgriffs 2 mit dem jeweiligen Ende der befestigungsflanschabgewandten Brückenstrebe 21a verbunden. An der Befestigungsseite BS am Ende der jeweiligen befestigungsflanschzugewandten Brückenstrebe 21b ist zumindest einer oder sind vorzugsweise beide der Rahmenabschnitte 22a, 22b nach unten dergestalt verbreitert bzw. verlängert, dass sich dabei ein Abschnitt, der ein ganz oder im Wesentlichen dreieckförmiges Geometrieelement 13 mit drei Eckpunkten 13a, 13b und 13c bildet. Dies ist insbesondere in Fig. 3 dargestellt.

Mit anderen Worten, einer oder vorzugsweise beide der Rahmenabschnitte 22a, 22b verbreitert/verbreitern sich jeweils über einen Verlauf ausgehend von dem Eckpunkt 13b an der befestigungsflanschabgewandten Seite des Scheibenumgriffs 2 jeweils bis zu dem Eckpunkt 13c an einem Außenrand 12 der Befestigungsseite BS des Bremsträgers 1 dergestalt, dass die Verbreiterung als eine Abstandsvergrößerung in Bezug auf die Ebene des Scheibenumgriffs 2 erfolgt. So ist die Verbreiterung an dem Außenrand 12 am größten, wobei ein Abstand des Eckpunktes 13a an dieser Stelle zu einer gedachten Verbindungslinie der Eckpunkte 13b und 13c bzw. der Ebene des Scheibenumgriffs 2 am größten ist.

Hier ist das dreieckförmige Geometrieelement 13 ein rechtwinkliges Dreieck mit den Eckpunkten 13a, 13b und 13c, Katheten a, b und der Hypothenuse c. Dabei bildet die befestigungsflanschzugewandete Seite des Rahmenabschnitts 22a, 22b jeweils eine kürzeste Seite zwischen den Eckpunkten 13a und 13c des dreieckförmigen Geometrieelementes 13 als die eine Kathete b. Die andere Kathete a wird durch eine Verbindung der Eckpunkte 13c und 13b gebildet. Der Eckpunkt 13b des dreieckförmigen Geometrieelementes 13 liegt an dem jeweiligen freien Ende des jeweiligen geraden Rippenabschnitts 11b, 11c der Verstärkungsrippe 11 und ist mit dem Eckpunkt 13a zur Bildung der Hypothenuse c des rechtwinkligen Dreiecks verbunden. Die Hypothenuse c kann bis an einen unteren Rand 25 des jeweiligen Rahmenabschnitts 22a, 22b parallel verschoben werden.

Der Rand 25 erstreckt sich zwischen einem, z.B. bogenförmigen, Übergangsabschnitt 25a an der Verstärkungsrippe 11 bis zu einem weiteren, z.B. auch bogenförmigen, Übergangsabschnitt 25b an dem Befestigungsflansch 20. Dabei verläuft der Rand 25 etwa senkrecht unterhalb der Mitte (in z-Richtung gesehen) des innenliegenden Trägerhorns 7b beginnend an dem unteren Übergangsabschnitt 25b geradlinig ohne Absätze schräg nach oben in positiver y-Richtung weiter in negativer z-Richtung zwischen dem innenliegenden Trägerhorn 7b und dem außenliegenden Trägerhorn 6b sowie weiter unter dem außenliegenden Trägehorn 6b hindurch bis zu dem oberen Übergangsabschnitt 25a. Damit liegt das obere Ende des Rands 25 im Bereich der Anbindung des geraden Rippenabschnitts 11b der Verstärkungsrippe 11, wie auch in Fig. 1 zu erkennen ist, außerhalb des außenliegenden Trägerhorns 6b.

Das Geometrieelement 13 kann auch als ein trapezförmiges Geometrieelement 13' angesehene werden. Das trapezförmige Geometrieelement 13' bildet ein rechtwinkliges Trapez mit den Eckpunkten 13'a, 13'b, 13'c, 13'd und mit den Grundseiten b und b' sowie Schenkeln a und c'. Dies ist am besten aus Fig. 3 ersichtlich. In diesem Fall bildet die Verbindung der Eckpunkte 13'a und 13'c die befestigungsflanschzugewandete Seite des Rahmenabschnitts 22a, 22b und gleichzeitig die lange Grundseite b' des trapezförmigen Geeometrieelementes 13', wie leicht vorstellbar ist.

Die Verbindung des Eckpunktes 13'c der Grundseite b' mit dem Eckpukt 13'b sowie die Verbindung des anderen Eckpunktes 13'a der Grundseite mit dem Eckpunkt 13'd bilden die Schenkel a' und c' des Trapezes. Dabei verläuft der eine Schenkel a' zwischen den Eckpunkten 13'c und 13'b parallel zu der Bremsscheibendrehachse 19.

Der andere Schenkel c' des trapezförmigen Geometrieelementes 13' zwischen den Eckpunkten 13'a und 13'd verläuft schräg von dem unteren Eckpunkt 13'a nach oben zu dem Eckpunkt 13'd, ist z.T. gestrichelt angedeutet und liegt in dem Rand 25.

Der obere Eckpunkt 13'd liegt bei dem trapezförmigen Geometrieelement 13' am oberen Ende des schrägen Schenkels in dem oberen Übergangsabschnitt 25a des Rands 25. Senkrecht über dem oberen Eckpunkt 13'd befindet sich der Eckpunkt 13'b, wobei die Verbindung der Eckpunkte 13'b und 13'd die kurze Grundseite b' des Trapezes bildet.

Der Rahmenabschnitt 22b (bzw. 22a) kann somit entweder als dreieckförmiges Geometrieelement 13 oder als trapezförmiges Geometrieelement 13' angesehen werden. Im Falle des trapezförmigen Geometrieelementes 13' bildet, z.B. in einer Projektion auf eine y-z-Ebene, im Wesentlichen ein Rechteck mit den Eckpunkten 13'b, 13b, 13d, 13'd, welches an die kurze Grundseite b' des trapezförmigen Geometrieelementes 13' angesetzt ist, einen wesentlichen Teil eines Querschnitts der Verstärkungsrippe 11.

Die Kathete a als Verbindung der Eckpunkte 13c, 13b des dreieckförmigen Geometrieelementes 13 schließt mit der Hypotenuse c als Verbindung der Eckpunkte 13a, 13b einen Winkel ein, welcher in einem Bereich von 15° bis 45°, vorzugsweise in einem Bereich von 15° bis 25°, liegt. Die Katheten b (13a-13c) und a (13c-13b) stehen somit untereinander und mit der Hypotenuse c (13a-13b) in einem bestimmten Verhältnis, welches im Wesentlichen durch die Formeln des rechtwinkligen Dreiecks des dreieckförmigen Geometrieelementes 13 bestimmt ist. Für das trapezförmige Geometrieelement 13' können auch die entsprechenden Gesetzmäßigkeiten eines solchen Trapezes zur Auslegung herangezogen werden.

Die jeweils dreieckförmige oder trapezförmige und damit vorteilhaft gewichtseinsparende Gestaltung des Rahmenabschnitts 22a, 22b ist durch eine massive und damit steife und somit verformungsarme Gestaltung der Verstärkungsrippe 11 möglich. Dadurch ist es - im Gegensatz zu den Bremsträgern nach der Stand der Technik - nicht mehr erforderlich, den Rahmenabschnitt 22a, 22b des Scheibenumgriffs 2 jeweils auf der befestigungsflanschabgewandten Seite des Bremsträgers 1 möglichst weit in Richtung kleiner oder negativer y-Werte in Bezug auf das Koordinatensystem in Fig. 1 herunterzuziehen, um dem Bremsträger 1 dadurch die notwendige Steifigkeit bzw. den erforderlichen Widerstand gegen Verformung zu geben.

Die Stützstellen 9a, 9b bzw. 10a, 10b stützen in y-Richtung bezogen auf das Koordinatensystem in Fig. 1 jeweils den Bremsbelag 8a, 8b auf dem Bremsträger 1 ab, wobei die Stützstellen 9a, 9b bzw. 10a, 10b gleichzeitig den Abstand des jeweiligen Bremsbelags 8 zur Fahrzeugachse definieren.

An Befestigungsstellen 16a, 16b der Stützwände 27a, 27b der innenliegenden Trägerhörner 7a, 7b sind Lagerbolzen für einen als Schiebesattel ausgebildeten Bremssattel 23 befestigbar (siehe Fig. 6). Dies ist dem Fachmann an sich bekannt und wird deshalb hier nicht näher beschrieben.

Der Bremsträger 1 ist ein in Bezug auf die Symmetrieebene "S" (siehe Fig. 2), die zwischen der y-Achse und der z-Achse des Koordinatensystems in Fig. 1 bzw. parallel dazu aufgespannt ist, vorzugsweise symmetrisches Bauteil. Er weist zur Aussteifung die Verstärkungsrippe 11 auf seiner befestigungsflanschabgewandten Außenseite auf, die sich in ihrer Längsrichtung in x-Richtung parallel zu einer Ebene der Bremscheibe 3 erstreckt.

Die Verstärkungsrippe 11 weist einen über die gesamte Fläche der befestigungsflanschabgewandten Außenseite des Bremsträgers 1 durchgehenden Konturzug auf, wobei die Oberseiten der geraden Rippenabschnitte 11a und 11b der Verstärkungsrippe 11 in Bezug auf die Grundfläche 5 nach unten, d.h. in negativer y-Richtung, abgesetzt sind. Dadurch ist jeweils ein Absatz 5a, 5b gebildet, welcher jeweils mit einem Teilabschnitt der Unterseite einer jeweiligen Stützwand 26a, 26b eines jeden außenliegenden Trägerhorns 6a, 6b in Verbindung steht.

Der Konturzug der Verstärkungsrippe 11 beginnt in der Fig. 1 an dem linken freien Enden des linken geraden Rippenabschnitts 11b im Bereich des Eckpunkts 13b des dreieckförmigen Geometrieelementes 13 am Rahmenabschnitt 22a, 22b des Bremsträgers 1. Er verläuft davon ausgehend jeweils zunächst parallel unter einer Ebene oder in der Ebene der konsolenartigen Grundfläche 5 des Scheibenumgriffs 2 in Bezug auf das Koordinatensystem in Fig. 1 in Richtung betragsmäßig kleinerer bzw. größerer x-Werte nach innen bzw. zur Mitte hin weiter als gerader Rippenabschnitt 11b. Der Konturverlauf der Verstärkungsrippe 11 folgt dann zur Mitte hin dem konvexen mittleren Rippenabschnitt 11a und somit der Form der bogenförmigen Brückenstrebe 21b an dessen Außenseite (d.h. an dessen von der Bremsscheibe abgewandten Außenseite) bis zur Symmetrieebene "S" (siehe Fig. 2) und weiter bis zu dem rechten Ende des mittleren Rippenabschnitts 11a, wo der Konturverlauf dann dem rechten geraden Rippenabschnitt 11c bis zu dessen freien Ende folgt. Die Verstärkungsrippe 11 ist zur Symmetrieebene "S" spiegelsymmetrisch ausgebildet. Die Verstärkungsrippe 11 steift in vorteilhafter Weise die befestigungsflanschabgewandte Seite des Bremsträgers 1 aus.

Die Verstärkungsrippe 11 ist derart positioniert, dass sie oberhalb der Befestigungsstellen 14a, 14b bzw. 15a, 15b des Bremsträgers 1 angeordnet ist. Dadurch ist sie im Bereich der Trägerhörner 6a, 6b nur knapp unterhalb der Ebene oder in der Ebene der Grundfläche 5 des Scheibenumgriffs 2 angeordnet. Durch diese Anordnung wird ein vorteilhafte kurze Kraft- und Momenteneinleitung in die Verstärkungsrippe 11 erreicht, so dass durch die Verstärkungsrippe 11 eine signifikante Aussteifung der befestigungsflanschabgewandten Seite des Bremsträgers 1 erreicht ist.

Durch eine entsprechend bemessene Dicke der Verstärkungsrippe 11 unter Ausnutzung des maximal verfügbaren Bauraums wird viel Werkstoff des Bremsträgers 1 in einer Ebene parallel zur x-z-Ebene in Bezug auf das Koordinatensystem in Fig. 1 in eine Position möglichst weit vom Scheibenumgriff 2 nach außen gebracht. Dadurch ist das für eine Verformung unter Betriebsbelastung besonders relevante Flächenträgheitsmoment bzw. Flächenmoment zweiten Grades in Bezug auf eine Verformungsachse, die parallel zur Y-Achse des Koordinatensystems in Fig. 1 liegt, vorteilhaft entsprechend groß ausgelegt. Dies ermöglicht vorteilhaft eine gezielte Reduzierung von Wandstärken im Bereich des Scheibenumgriffs 2.

In diesem Zusammenhang weist die bremsscheibenzugewandten Seite der befestigungsflanschzugewandten Seite des Scheibenumgriffs 2 unterhalb der Trägerhörner 7a, 7b im Bereich der Befestigungsstellen 15a, 15b jeweils Taschen 17a, 17b auf, durch die an diesen Stellen die Dicke bzw. die Wandstärke des Bremsträgers 1 signifikant reduziert ist. Durch die Wandstärkenreduzierung im Bereich der Taschen 17a, 17b wird vorteilhaft Werkstoff und damit Gewicht gespart.

Mit dem Begriff "Tasche" ist eine durch eine oder mehrere Wände und einem Boden begrenzte -im Gegensatz zu einer Nut- flächige Ausnehmung innerhalb eines Geometrieelementes eines Bauteils gemeint. Durch die Tasche 17a, 17b wird die Dicke des Geometrieelementes im Bereich der Tasche 17a, 17b reduziert.

In Fig. 1 ist ebenfalls deutlich dargestellt, dass die Grundfläche 5 in dem jeweiligen Absatz 5a, 5b sowie die geraden Rippenabschnitte 11a und 11b der Verstärkungsrippe 11 im Bereich der Trägerhörner 6a, 6b auf der befestigungsflanschabgewandten Seite des Bremsträgers 1 jeweils einen Durchbruch 18a, 18b aufweisen. Die beiden Durchbrüche 18a, 18b erstrecken sich auch jeweils in positiver y-Richtung in die jeweilige Stützwand 26a, 26b des zugehörigen außenliegenden Trägerhorns 6a, 6b hinein und sind spiegelsymmetrisch zu der Symmetrieebene "S" angeordnet (siehe Fig. 2). Die Durchbrüche 18a, 18b sind vorteilhaft an Stellen des Bremsträgers 1 mit niedriger Verformung und damit niedriger mechanischer Spannung angeordnet und wirken vorteilhaft gewichtsreduzierend, ohne die mechanische Spannung im Bremsträger 1 im Bereich der Durchbrüche 18a, 18b durch Kerbwirkung zu erhöhen. Darüber hinaus dienen die Durchbrüche 18a, 18b vorteilhaft zur Wärmeabfuhr von den Bremsbelägen 8 und von der Bremsscheibe 3 an die Umgebung. Zudem können die Durchbrüche 18a, 18b ein NVH-Verhalten (Noise, Vibration, Harshness) verbessernd beeinflussen, da sich durch die Durchbrüche 18a, 18b der Schwerpunkt des Bremsträgers 1 nach innen verschiebt und die Eigenfrequenz des Bremsträgers 1 ansteigen lässt.

In Fig. 2 und Fig. 3 ist deutlich dargestellt, dass die jeweils innenliegenden Trägerhörner 7a, 7b höher sind, d.h. in y-Richtung in Bezug auf das Koordinatensystem in Fig. 1 maßlich größer sind als die außenliegenden Trägerhörner 6a, 6b. Ferner ist erkennbar, dass die außenliegenden Trägerhörner 6a, 6b eine kleinere Wandstärke aufweisen als die innenliegenden Trägerhörner 7a, 7b. Die Trägerhörner 6a, 6b sowie 7a, 7b sind zur Gewichtsreduzierung jeweils an ihren freien Enden spanend bearbeitet.

In Fig. 2 ist deutlich dargestellt, dass eine lichte Weite "W₁" des Bremsbelagschachtes, den die außenliegenden Trägerhörner 6a, 6b ausformen, größer ist als eine lichte Weite "W₂" des Bremsbelagschachtes, den die innenliegednen Trägerhörner 7a, 7b ausformen. Durch die reduzierte lichte Weite "W₂" des befestigungsflanschzugewandt angeordneten Bremsbelagschachtes wird die Steifigkeit auf der befestigungsflanschzugewandten Seite des Bremsträgers 1 vorteilhaft erhöht. Dadurch werden die mechanischen Spannungen in diesem Bereich des Bremsträgers 1 ebenfalls vorteilhaft reduziert. Dementsprechend können Wandstärken entsprechend reduziert und vorteilhaft Gewicht gespart werden.

In Fig. 3 ist der dreieckförmige Rahmenabschnitt 22a, 22b (hier: 22b) in einer Draufsicht projiziert in einer y-z-Ebene dargestellt. Ebenfalls gut erkennbar ist die Anordnung bzw. Positionierung der Verstärkungsrippe 11 hier unterhalb der Grundfläche 5 in Bereichen außerhalb der Brückenstrebe 21a. Wie bereits ausgeführt verbreitert sich der Rahmenabschnitt 22b ausgehend von einer befestigungsflanschabgewandten Seite des Scheibenumgriffs 2 von dem Eckpunkt 13b jeweils bis zu einem Außenrand 12 des Befestigungsflansches des Bremsträgers 1 mit dem Eckpunkt 13c. In dem gezeigten Ausführungsbeispiel verbreitert sich der Rahmenabschnitt 22b derart, dass ausgehend von der befestigungsflanschabgewandten Seite des Scheibenumgriffs 2 beziehungsweise ausgehend von der Verstärkungsrippe 11 hin zu dem Außenrand 12 des Befestigungsflansches 20 des Bremsträgers 1 sich das dreieckförmige Geometrieelement 13 oder trapezförmige Geometrieelement 13' bildet. Hier ist das dreieckförmige Geometrieelement 13 mit strichpunktierten Linien angedeutet. So folgt die Außenkontur des Rahmenabschnitts 22b im Wesentlichen dem Dreieck bzw. dem nicht vollständig gezeigten aber leicht vorstellbaren Trapez. Gleiches gilt analog für den in Fig. 3 nicht dargestellten Rahmenabschnitt 22a auf der gegenüberliegenden Seite des Scheibenumgriffs 2.

In Fig. 4 sind die Durchbrüche 18a, 18b in dem der Grundfläche 5 im Bereich der außenliegenden Trägerhörner 6a, 6b deutlich zu sehen.

In Fig. 5 ist der Bremsträger 1 in einer Draufsicht dargestellt. Gut erkennbar ist die im Wesentlichen rechteckige Form des Scheibenumgriffs 2. Der Scheibenumgriff 2 wird gebildet aus den beiden parallelen Brückenstreben 21a, 21b sowie den die Brückenstreben 21a, 21b verbindenden Rahmenabschnitten 22a, 22b. Dabei sind die Enden der Brückenstreben 21a, 21b mit dem jeweiligen korrespondieren Ende der Rahmenabschnitte 22a, 22b derart verbunden, dass die äußere Kontur in der in Fig. 5 dargestellten Aufsicht in einem Toleranzbereiche eine Rechteckform darstellt. Wie in der in Fig. 2 dargestellten Seitenansicht erstreckt sich die Verstärkungsrippe 11 zwischen den den Trägerhörnern 6a, 6b zugewandten Seiten des Scheibenumgriffs 2 mit Ausnahme des Bereiches im Achsübergriff in einer Ebene geradlinig. Im Bereich des Achsübergriffs ist der mittlere Rippenabschnitt 11a der Verstärkungsrippe 11 bogenförmig, insbesondere kreisbogenförmig, ausgebildet.

In Fig. 6 ist eine Scheibenbremse 4 mit einem Bremssattel 23 zur Aufnahme einer Zuspannmechanik und mit dem Bremsträger 1 dargestellt. Zu erkennen ist ferner ein pneumatischer Bremszylinder 24. Die Scheibenbremse 4 weist ferner die Bremsscheibe 3 sowie die Bremsbeläge 8 auf. Der dreieckförmige Rahmenabschnitt 22a in Ausgestaltung als dreieckförmiges Geometrieelement 13 sowie die Verstärkungsrippe 11 des Bremsträgers 1 sind gut erkennbar.

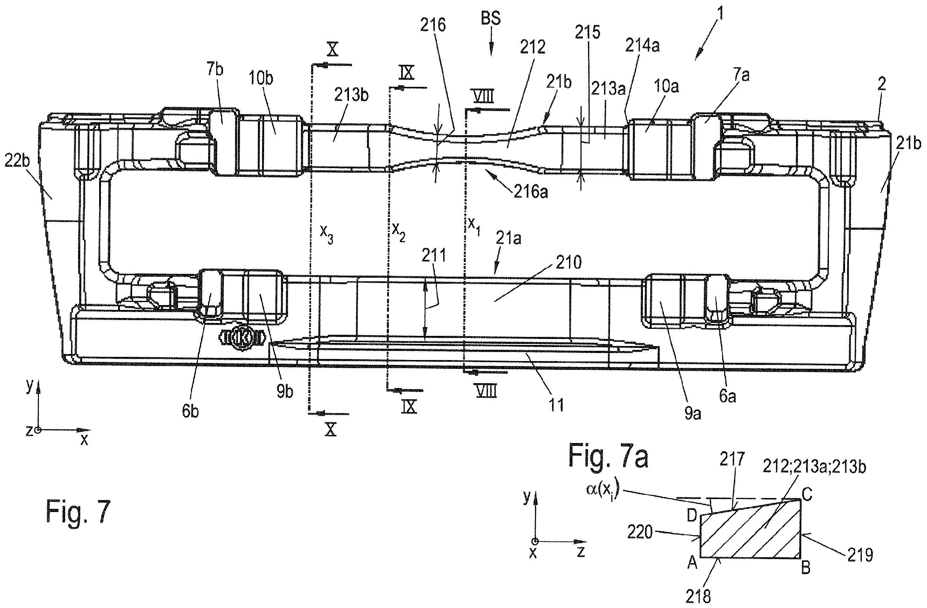

**Fig. 7** zeigt eine Draufsicht auf ein zweites Ausführungsbeispiel des erfindungsgemäßen Bremsträgers 1. Dieses zweite Ausführungsbeispiel mit seinen Varianten kann auch eine eigenständige Erfindung sein oder wie hier beschrieben in Kombination mit dem ersten Ausführungsbeispiel ausgebildet sein. In **Fig. 7a** ist eine schematische Querschnittdarstellung der befestigungsflanschzugewandten Brückenstrebe 21b gezeigt.

Die befestigungsflanschabgewandte Brückenstrebe 21a weist einen Brückenstrebenabschnitt 210 mit einer über die gesamte Länge der Brückenstrebe 21a in x-Richtung gleichbleibenden Breite 211 in y-Richtung auf.

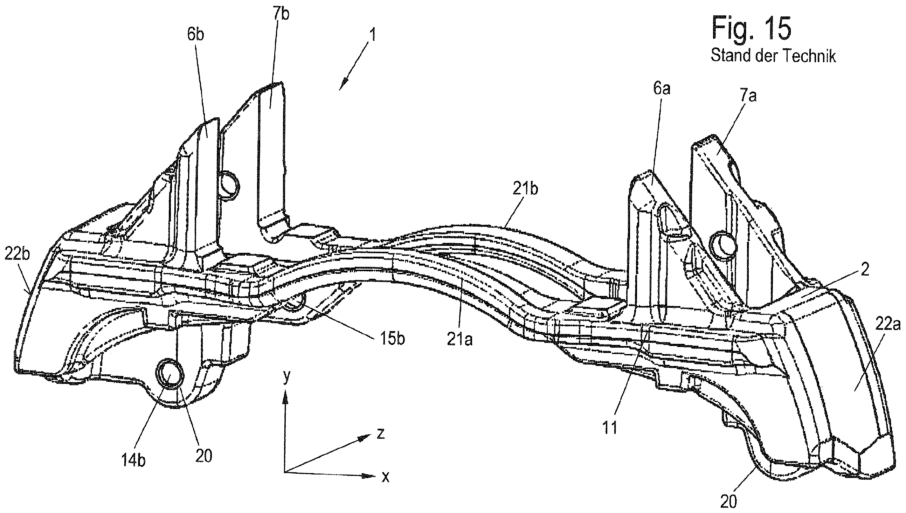

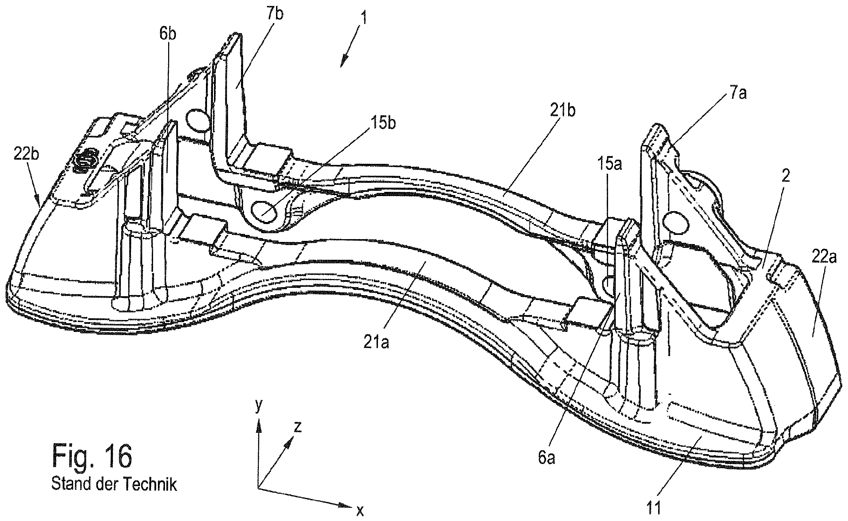

Die befestigungsflanschzugewandte Brückenstrebe 21b verbindet die Befestigungsflansche 20, welche Anschraubflächen zur Befestigung des Bremsträgers 1 aufweisen, miteinander. Im Stand der Technik, der in den Figuren 15 und 16 gezeigt ist, ist die befestigungsflanschzugewandte Brückenstrebe 21b mit einem im Wesentlichen quadratischen oder viereckigen Querschnitt versehen.

Im Unterschied zu dem ersten Ausführungsbeispiel ist die befestigungsflanschzugewandte Brückenstrebe 21b jedoch unterschiedlich ausgebildet. Die befestigungsflanschzugewandte Brückenstrebe 21a umfasst einen mittleren Brückenstrebenabschnitt 212, dessen Enden jeweils mit einem Auslaufabschnitt 213a, 213b verbunden sind. Jeder Auslaufabschnitt 213a, 213b ist jeweils über einen Anbindungsabschnitt 214a, 214b mit dem jeweiligen Unterbau der zugehörigen Stützstelle 10a, 10b des jeweiligen befestigungsflanschzugewandten Trägerhorns 7a, 7b angebunden. In der Fig. 7 ist auf diese Weise die befestigungsflanschzugewandte Brückenstrebe 21b über den rechten Auslaufabschnitt 213a durch den rechten Anbindungsabschnitt 214a unterhalb der Stützstelle 10a des Trägerhorns 7a angebracht. Spiegelbildlich dazu erfolgt die Anbindung der befestigungsflanschzugewandten Brückenstrebe 21b über den linken Auslaufabschnitt 213b durch den linken Anbindungsabschnitt 214b unterhalb der Stützstelle 10b des anderen Trägerhorns 7b.

In diesem zweiten Ausführungsbeispiel weisen die Auslaufabschnitte 213a, 213b jeweils eine konstante Breite in y-Richtung über ihre Länge in x-Richtung auf. Eine Breite 216 des mittleren Brückenstrebenabschnitts 212 weist jedoch über die Länge des Brückenstrebenabschnitts 212 in x-Richtung unterschiedliche Werte auf. Beginnend an einer Verbindungsstelle mit dem rechten Auslaufabschnitt 213a (hier in negativer x-Richtung gesehen) ist die Breite 216 zunächst gleich der Breite 215 des rechten Auslaufabschnitts 213a, wird dann bis zur Mitte hin bis in etwa auf ein halbes Maß geringer und nimmt dann wieder bis einer Verbindungsstelle mit dem linken Auslaufabschnitt 213b zu, bis das die Breite 216 ihr Ausgangsmaß aufweist. Auf diese Weise ist eine Einschnürung 216a gebildet. Dadurch kann zudem Werkstoff eingespart und ein Gesamtgewicht des Bremsträgers 1 vermindert werden.

Unter der Mitte des mittleren Brückenstrebenabschnitts 21b ist hier die Symmetrieebene S (siehe Fig. 2) zu verstehen, in welcher in Fig. 7 auch eine Schnittebene VIII-VIII mit der Koordinate x₁ liegt.

In einem weiteren Unterschied ist die befestigungsflanschzugewandte Brückenstrebe 21b mit zumindest einer um einen Winkel gekippten Seite versehen. Unter dem Begriff "gekippt" ist eine Neigung zu verstehen, wenn die betreffende Seite zu einer gedachten waagerechten x-z-Ebene um den Winkel als Neigungswinkel geneigt ist, wohingegen der Begriff "gekippt" eine Erhebung bedeutet, wenn die betreffende Seite zu einer gedachten waagerechten x-z-Ebene um den Winkel als Erhebungswinkel ansteigt.

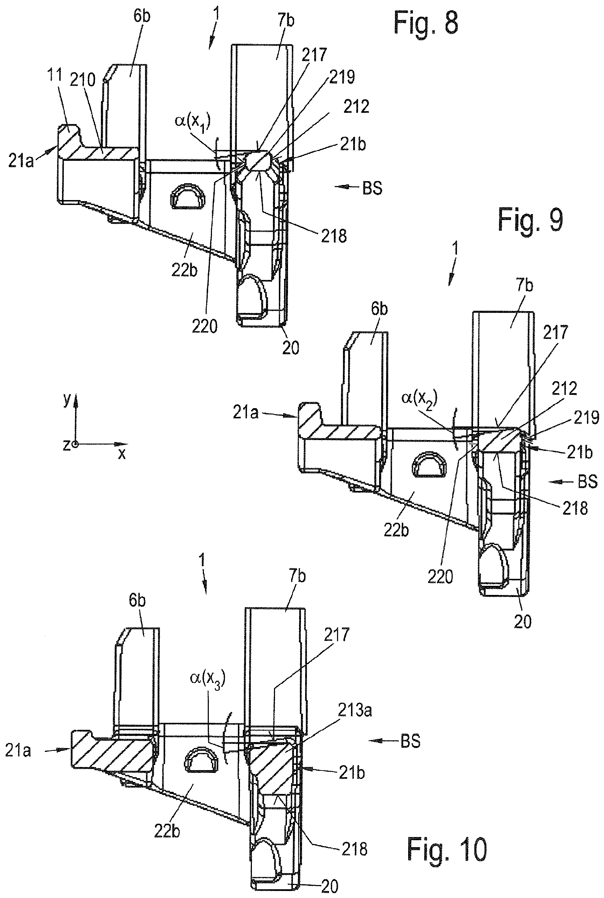

Hierzu zeigen **Fig. 8** bis **10** Schnittdarstellungen des zweiten Ausführungsbeispiels des erfindungsgemäßen Bremsträgers 1 nach Fig. 7. Alle Schnittebenen liegen jeweils in einer y-z-Ebene.

In Fig. 8 ist ein Schnitt längs einer Schnittebene VIII-VIII einer Koordinate x₁ in x-Richtung nach Fig. 7 gezeigt, wobei der Querschnitt des Brückenstrebenabschnitts 212 der befestigungsflanschzugewandten Brückenstrebe 21b in seiner Mitte im Bereich der größten Einschnürung 216 dargestellt ist. Der Querschnitt des Brückenstrebenabschnitts 212 und der Auslaufabschnitte 213a, 213b ist in einer schematischen Querschnittdarstellung in Fig. 7a gezeigt und kann vereinfacht als ein viereckiger Querschnitt betrachtet werden, welcher in diesem Beispiel ein rechtwinkliges Trapez mit den Eckpunkten A, B, C, D als vereinfachter Querschnitt bildet. Unter der Vereinfachung des Querschnitts ist hier zu verstehen, dass die Abrundung der gezeigten abgerundeten Ecken bzw. Kanten der Einfachheit halber für diese Beschreibung nicht betrachtet wird.

Die beiden Grundseiten dieses Trapezes A, B, C, D verlaufen parallel in y-Richtung als eine Außenseite 219 und eine Innenseite 220, wobei die längere Grundseite als Außenseite 219 zur Befestigungsseite BS des Bremsträgers 1 weist. Die Außenseite 219 und die Innenseite 220 verlaufen in diesem Ausführungsbeispiel parallel zueinander. Der Schenkel, welcher in einem rechten Winkel mit dieser Grundseite/Außenseite 219 verbunden ist, bildet eine Unterseite 218 und verläuft parallel zur z-Achse. Eine Oberseite 217 des Brückenstrebenabschnitts 212 ist in einem Winkel α(x₁) um den Eckpunkt C von der z-Achse geneigt bzw. gekippt und bildet den zweiten Schenkel des Trapezes. Auf diese Weise ist der Winkel α(x₁) ein Neigungswinkel der Oberseite 217 zu einer gedachten x-z-Ebene, welche durch den Eckpunkt C verläuft.

Die so geneigte Oberseite 217 des Brückenstrebenabschnitts 212 ist in diesem Beispiel nach innen unten geneigt. Das heißt, nach innen zwischen die Trägerhörner 6b und 7b bzw. 6a und 7a. Dieser Neigungswinkel α(x₁) liegt in einem Bereich von etwa 8° bis 10° und beträgt hier vorzugsweise 9°.

Fig. 9 zeigt einen Schnitt längs einer Schnittebene IX-IX einer Koordinate x₂ in x-Richtung nach Fig. 7. Im Unterschied zu Fig. 8 ist hier der Querschnitt des mittleren Brückenstrebenabschnitts 212 aufgrund der größeren Breite 216 vergrößert. Der Neigungswinkel α(x₂) liegt auch in einem Bereich von etwa 8° bis 10° und beträgt hier jedoch vorzugsweise 9,4°.

Der Schnitt in Fig. 10 verläuft längs einer Schnittebene X-X einer Koordinate x₃ in x-Richtung nach Fig. 7. Der gezeigte Querschnitt des linken Auslaufabschnitts 213b weist die volle Breite 215d des linken Auslaufabschnitts 213b im Bereich eines Übergangs zu dem linken Anbindungsabschnitt 214b auf. Der Querschnitt ist nun aus einer Trapezform in eine größere Form übergegangen, welche aus der ursprünglichen Trapezform und weiteren geometrischen Grundformen zusammengesetzt ist, was hier nicht weiter behandelt werden soll. Der Neigungswinkel α(x₃) liegt auch hier in einem Bereich von etwa 8° bis 10° und beträgt hier jedoch vorzugsweise 9,2°.

Die obige Beschreibung der geneigten Oberseite 217 gilt auch für den nicht beschriebenen rechten Teil der befestigungsflanschzugewandten Brückenstrebe 21b. Alternativ ist es aber auch denkbar, dass die Neigung der rechten Oberseite 217 nicht symmetrisch zu der linken geneigten Oberseite 217, sondern unterschiedlich ausgeführt sein kann.

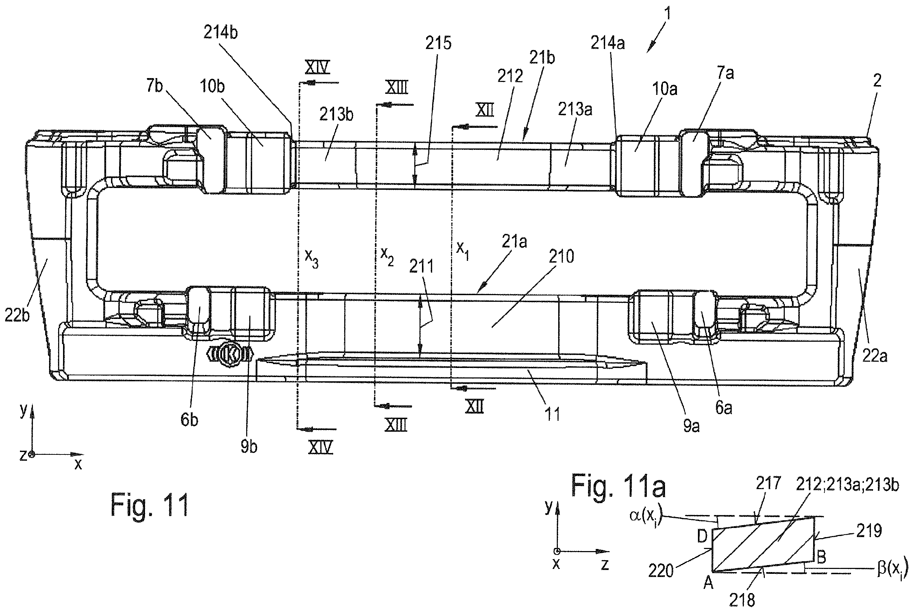

**Fig. 11** zeigt eine Draufsicht auf eine Variante des zweiten Ausführungsbeispiels des erfindungsgemäßen Bremsträgers nach Fig. 7. **Fig. 11a** zeigt eine schematische Querschnittdarstellung der befestigungsflanschzugewandten Brückenstrebe 21b.

Im Gegensatz zu dem zweiten Ausführungsbeispiel nach Fig. 7 weist in dieser Variante die befestigungsflanschzugewandte Brückenstrebe 21b eine Breite 215 auf, welche über die gesamte Länge des mittleren Brückenstrebenabschnitts 212 einschließlich der Auslaufabschnitte 213a, 213b unveränderlich bleibt.

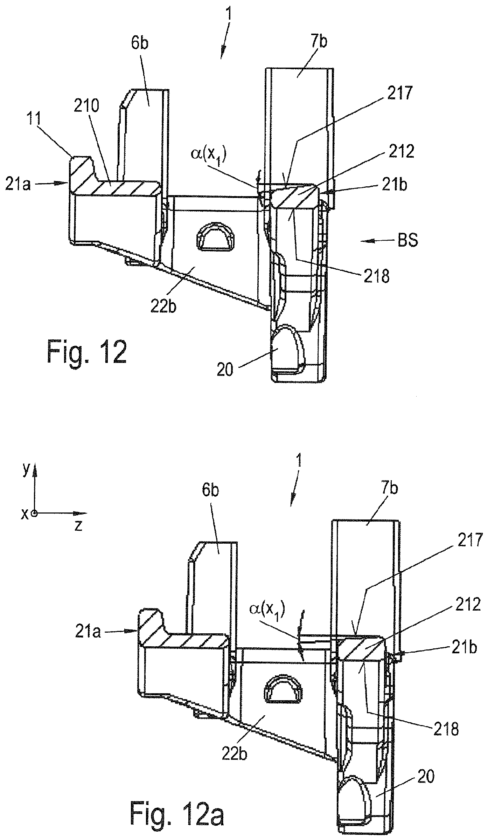

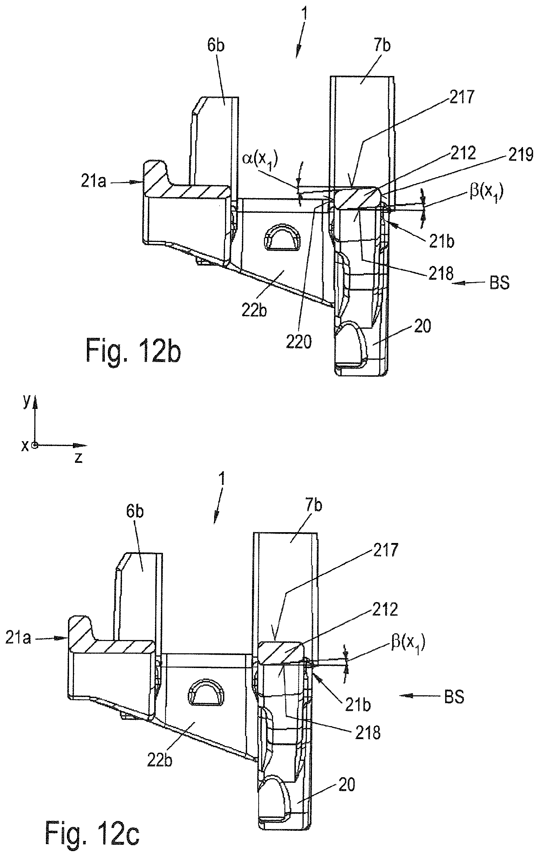

**Fig. 12** bis **13** stellen Schnittdarstellungen der Variante des zweiten Ausführungsbeispiels des erfindungsgemäßen Bremsträgers 1 nach Fig. 11 dar. Auch hier liegen alle Schnittebenen jeweils in einer y-z-Ebene und weisen gleiche Koordinaten x₁₋₃ auf.

Auch in dieser Variante ist die befestigungsflanschzugewandte Brückenstrebe 21b mit zumindest einer gekippten Seite, hier bevorzugt die Oberseite 217, versehen.

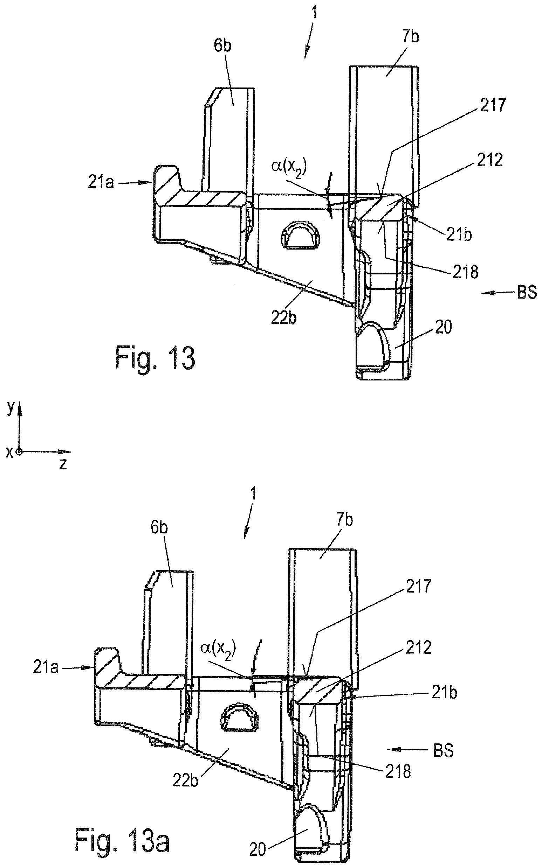

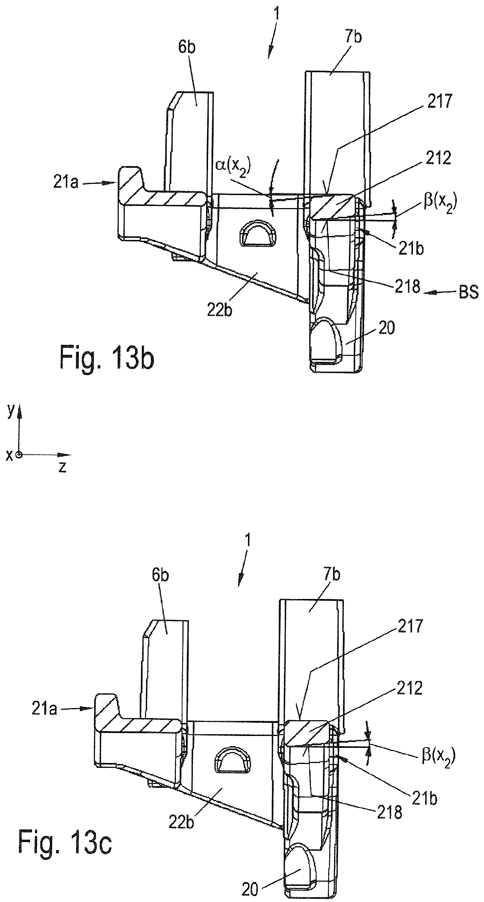

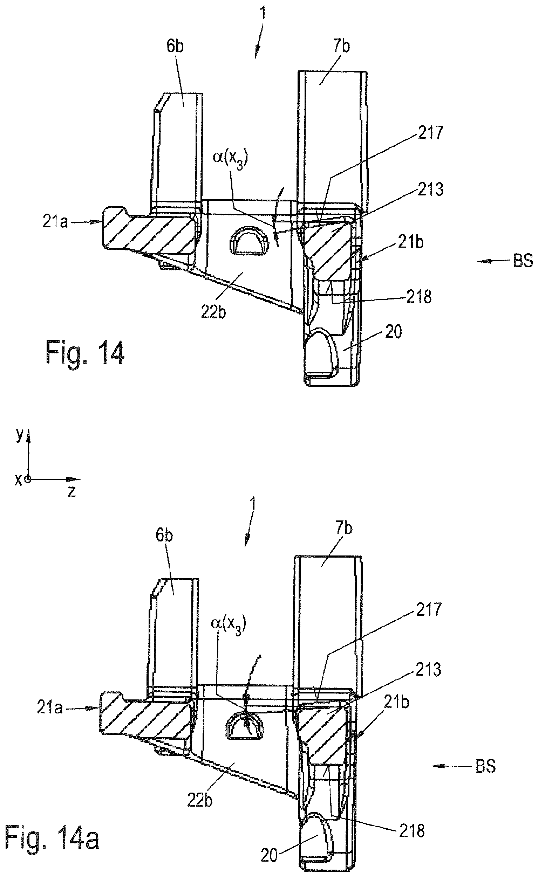

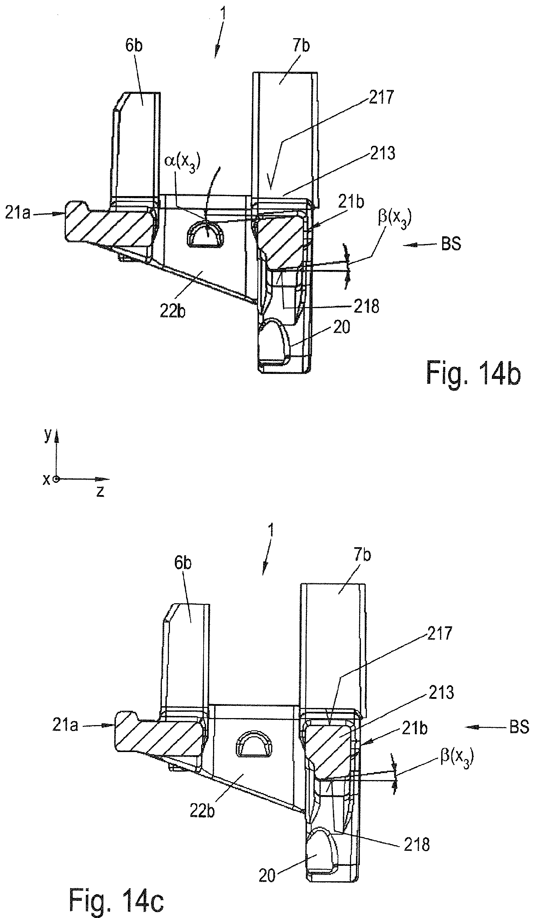

Der Winkel α(x₁) in Fig. 12 liegt in dieser Variante bei 9°, verändert sich zu α(x₂) = 9,4° in Fig. 13 und wird in **Fig. 14** wieder etwas geringer mit α(x₃) = 9,2°.

In **Fig. 12a****,** **13a** **und** **14a** sind weitere Varianten des Winkels α(xᵢ) beispielhaft gezeigt. Fig. 12a zeigt α(x₁) = 5° und Fig. 13a zeigt α(x₂) = 5,2°. Hierbei wird der Winkel α(xᵢ) jedoch in der dritten Position bei x=3 nicht wieder geringer, sondern vergrößert sich auf α (x₃) = 5,3°, wie Fig. 14a zeigt.

Bei Betrieb der Scheibenbremse, welcher der Bremsträger 1 zugeordnet ist, treten üblicherweise erhöhte Spannungen auf, welcher zu einer wesentlichen Lebensdauerverringerung führen können, besonders wenn sich diese erhöhten Spannungen innen oder außen an den Kanten (Radien) der Brückenstrebe 21b in den Auslaufabschnitten 213a und 213b konzentrieren. Abhilfe schafft hierzu nun die geneigte bzw. gekippte Oberseite 217 der befestigungsflanschzugewandten Brückenstrebe 21b. Damit wird es möglich, die Spannungen flächig über den Querschnitt zu verteilen, die Spannung zu reduzieren und somit auch das Gewicht des Bremsträgers 1 zu vermindern. Der Winkel α(x₁) kann sich dabei über die gesamte Brückenstrebe 21b erstrecken und in einem Bereich von 1° bis 20° bewegen. In einer bevorzugten Ausführung beträgt der Winkel α(x₁) 5° bis 12°, in dem gezeigten Beispiel etwa 9° bis 9,4°. Der Winkel α(xᵢ) kann sich über den gesamten Verlauf der Brückenstrebe 21b auch variabel in Abhängigkeit von der Koordinate x verändern. Dabei spielt die Lage der Spannungen eine entscheidende Rolle. Der Winkel α(xᵢ) muss so gewählt werden, dass im Bereich der Spannungskonzentration Material entfernt wird.

Alternativ ist es auch denkbar, dass die Unterseite 218 der Brückenstrebe 21b allein oder auch zusätzlich gekippt bzw geneigt ist, um evtl. auch an der Unterseite 218 Spannungskonzentrationen zu entzerren. Dies wird im Folgenden noch näher erläutert.

Eine solche Möglichkeit zeigen **Fig. 12b****,** **13b** und **14b****,** wobei auch die Unterseite 218 der befestigungsflanschzugewandten Brückenstrebe 21b zusätzlich zu der geneigten Oberseite 217 geneigt ist. Eine schematische Querschnittdarstellung zeigt Fig. 11a.

In dieser Variante ist die Unterseite 218 in einem Winkel β(x₁) in Bezug auf die z-Achse um den Eckpunkt A nach oben geneigt, wie aus Fig. 11a am besten zu erkennen ist. Die Außenseite 219 und die Innenseite 220 verlaufen hier in y-Richtung und parallel zueinander. Für den Fall, dass die Winkel α(xᵢ) und β(x₁) gleich groß sind, bildet der Querschnitt des mittleren Brückenstrebenabschnitts 212 vereinfacht gesehen ein Parallelogramm.

In dem Beispiel nach Fig. 12b sind α(xᵢ) = β(x₁) = 5° und somit gleich groß. Bei der Koordinate x₂, was Fig. 13b zeigt, beträgt α(x₂) = 5,2°, wobei β(x₂) = 5,4° größer ist. Hierbei wird der Winkel α(xᵢ) in der dritten Position bei x=3 wieder geringer: α(x₃) = 5,1°. β (x₃) ist jedoch wesentlich größer geworden: β(x₃) = 7,2° wie aus Fig. 14b hervorgeht.

Fig. **12c****,** **13c** und **14c** zeigen eine weitere Variante, bei welcher nur die Unterseite 218 geneigt ist. Hierbei weisen die Werte der Winkel β(xᵢ) die gleichen Werte bei der Variante nach Fig. 12b, 13c und 14c auf, vergrößern sich also von der Mitte der befestigungsflanschzugewandten Brückenstrebe 21 zu deren jeweiligen Ende hin.

Durch die oben beschriebenen Ausführungsbeispiele wird die Erfindung nicht i eingeschränkt. Die Erfindung ist im Rahmen der beigefügten Ansprüche modifizierbar.

So ist es z.B. denkbar, das alle Seiten der befestigungsflanschzugewandten Brückenstrebe 21b geneigt sein können.

Es sind selbstverständlich auch andere Querschnitte der befestigungsflanschzugewandten Brückenstrebe 21b als die oben beschriebenen denkbar.

Es ist auch möglich, dass die befestigungsflanschzugewandte Brückenstrebe 21b eine Art Verdrillung aufweist. Die Verdrillung kann dabei bezüglich der Symmetrieachse, symmetrisch aber auch unsymmetrisch ausgebildet sein.

Denkbar ist auch, dass die Oberseite 217 nach außen geneigt und/oder die Unterseite nach innen geneigt ist.

Die Einschnürung 216a kann auch an der befestigungsflanchabgewandten Brückenstrebe 21a vorhanden sein.

Weiterhin ist es auch denkbar, dass die jeweilige Brückenstrebe 21a, 21b mehr als eine Einschnürung 216a aufweist.

Die Einschnürung/en 216a kann/können auch einseitig in Bezug auf eine gedachte Längsachse der jeweiligen Brückenstrebe 21a, 21b ausgeführt sein.

### BEZUGSZEICHENLISTE

- 1: Bremsträger
- 2: Scheibenumgriff
- 3: Bremsscheibe
- 4: Scheibenbremse
- 5: Grundfläche
- 5a, 5b: Absatz
- 6a, 6b: Trägerhorn
- 7a, 7b: Trägerhorn
- 8: Bremsbelag
- 9a, 9b: Stützstelle
- 10a, 10b: Stützstelle
- 11: Verstärkungsrippe
- 11a, 11b, 11c: Rippenabschnitt
- 12: Außenrand
- 13, 13': Geometrieelement
- 13a, 13b, 13c, 13d: Eckpunkt
- 13'a, 13'b, 13'c, 13'd: Eckpunkt
- 14a, 14b: Befestigungsstelle
- 15a, 15b: Befestigungsstelle
- 16a, 16b: Befestigungsstelle
- 17a, 17b: Tasche
- 18a, 18b: Durchbruch
- 19: Bremsscheibendrehachse
- 20: Befestigungsflansch
- 21a, 21b: Brückenstrebe
- 22a, 22b: Rahmenabschnitt
- 23: Bremssattel
- 24: Bremszylinder
- 25: Rand
- 25a, 25b: Übergangsabschnitt
- 26a, 26b: Stützwand
- 27a, 27b: Stützwand
- 28a, 28b: Ausnehmung

- 210: Brückenstrebenabschnitt
- 211: Breite
- 212: Brückenstrebenabschnitt
- 213a, 213b: Auslaufabschnitt
- 214a, 214b: Anbindungsabschnitt
- 215, 216: Breite
- 216a: Einschnürung
- 217: Oberseite
- 218: Unterseite
- 219: Außenseite
- 220: Innenseite

- BS: Befestigungsseite
- W₁: lichte Weite
- W₂: lichte Weite
- S: Symmetrieebene
- x, y, z: Koordinaten
- α(xᵢ), β(xᵢ): Winkel

## Patentansprüche

1. Einstückiger Bremsträger (1) für eine Scheibenbremse (4) eines Fahrzeugs, die eine Bremsscheibe (3) aufweist, mit folgenden Merkmalen:
a) ein rahmenartiger Scheibenumgriff (2),
a1) der zwei zueinander parallele Brückenstreben (21a, 21b) aufweist,
a2) sowie zwei parallel zu einer Bremscheibendrehachse (19) angeordnete, die Brückenstreben (21a, 21b) verbindende Rahmenabschnitte (22a, 22b),
b) ein Befestigungsflansch (20), an dem der Bremsträger (1) an einem Achsflansch einer Fahrzeugachse befestigbar ist,
c) wobei sich beide der Rahmenabschnitte (22a, 22b) ausgehend von einer befestigungsflanschabgewandten Seite des Scheibenumgriffs (2) jeweils bis zu einem Außenrand (12) des Befestigungsflansches des Bremsträgers (1) dergestalt verbreitert/verbreitern, dass die Verbreiterung jeweils als eine Abstandsvergrößerung in Bezug auf eine Ebene des Scheibenumgriffs (2) ausgebildet ist,
**dadurchgekennzeichnet, dass**
d) jeweils ausgehend von der befestigungsflanschabgewandten Seite des Scheibenumgriffs (2) jeweils bis zu einem Außenrand (12) des Befestigungsflansches (20) des Bremsträgers (1) ein Geometrieelement (13, 13') gebildet ist, wobei das Geometrieelement (13) dreieckförmig ist, wobei die , befestigungsflanschzugewandte Seite des Rahmenabschnitts (22a, 22b) jeweils eine kürzeste Seite des dreieckförmigen Geometrieelementes (13) bildet oder dass das Geometrieelement (13') trapezförmig ist, wobei die befestigungsflanschzugewandte Seite des Rahmenabschnitts (22a, 22b) jeweils eine lange Grundseite des trapezförmigen Geometrieelementes (13') bildet.

2. Bremsträger (1) nach einem der vorgenannten Ansprüche, **dadurch gekennzeichnet, dass** einer oder beide der Rahmenabschnitte (22a, 22b) einen geradlinig verlaufenden unteren Rand (25) ohne Absätze aufweist/aufweisen.

3. Bremsträger (1) nach einem der vorgenannten Ansprüche, **dadurch gekennzeichnet, dass** der Bremsträger (1) jeweils zwei Trägerhörner (6a, 6b) auf einer befestigungsflanschabgewandten Seite des Bremsträgers (1) aufweist und jeweils zwei Trägerhörner (7a, 7b) auf einer befestigungsflanschzugewandten Seite des Bremsträgers (1) aufweist.

4. Bremsträger (1) nach Anspruch 3, **dadurch gekennzeichnet, dass** die jeweils befestigungsflanschzugewandt angeordneten Trägerhörner (7a, 7b) höher sind als die jeweils befestigungsflanschabgewandt angeordneten Trägerhörner (6a, 6b).

5. Bremsträger (1) nach Anspruch 3 oder 4, **dadurch gekennzeichnet, dass** die beiden Trägerhörner (7a, 7b) auf der befestigungsflanschzugewandten Seite des Bremsträgers (1) jeweils einen L-förmigen Querschnitt aufweisen.

6. Bremsträger (1) nach Anspruch 5, **dadurch gekennzeichnet, dass** beide Schenkel des jeweils L-förmigen Querschnitts der Trägerhörner (7a, 7b) dicker gestaltet sind als die Trägerhörner (6a, 6b) auf der befestigungsflanschabgewandten Seite des Bremsträgers (1).

7. Bremsträger (1) nach einem der vorstehenden Ansprüche , **dadurch gekennzeichnet, dass** der Bremsträger (1) auf seiner befestigungsflanschabgewandten Außenseite eine Verstärkungsrippe (11) aufweist, die einen mittleren, gebogenen Rippenabschnitt (11a) und zwei geradlinig verlaufende Rippenabschnitte (11b, 11c) umfasst, und einen geschlossenen Konturzug aufweist.

8. Bremsträger (1) nach Anspruch 7, **dadurch gekennzeichnet, dass** der Konturzug der Verstärkungsrippe (11) jeweils an zwei Enden an dem Rahmenabschnitt (22a, 22b) des Bremsträgers (1) mit jeweils einem geradlinig verlaufenden Rippenabschnitt (11b, 11c) beginnt und jeweils zunächst parallel unter einer Ebene oder in der Ebene einer Grundfläche (5) des Scheibenumgriffs (2) verläuft und dann mit dem mittleren Rippenabschnitt (11a) der Brückenstrebe (21b) an deren befestigungsflanschabgewandter Seite bzw. Außenseite folgt und bis zu einer Symmetrieebene "S" des Bremsträgers (1) verläuft.

9. Bremsträger (1) nach Anspruch 8, **dadurch gekennzeichnet, dass** sich der mittlere gebogene Rippenabschnitt (11a) der Verstärkungsrippe (11) zwischen den den Trägerhörnern (6a, 6b) zugewandten Seiten des Scheibenumgriffs (2) im Bereich eines Achsübergriffs bogenförmig, insbesondere kreisbogenförmig, erstreckt.

10. Bremsträger (1) nach Anspruch 9, **dadurch gekennzeichnet, dass** die Verstärkungsrippe (11) zu der Symmetrieebene "S" spiegelsymmetrisch ausgebildet ist.

11. Bremsträger (1) nach einem der Ansprüche 8 bis 10, **dadurch gekennzeichnet, dass** die Verstärkungsrippe (11) derart positioniert ist, dass sie oberhalb von Befestigungsstellen (14a, 14b) bzw. (15a, 15b) des Bremsträgers (1) angeordnet ist.

12. Bremsträger (1) nach einem der vorgenannten Ansprüchen, **dadurch gekennzeichnet, dass** der Bremsträger (1) Taschen (17a, 17b) aufweist.

13. Bremsträger (1) nach Anspruch 12, **dadurch gekennzeichnet, dass** die Taschen (17a, 17b) auf der bremsscheibenzugewandten Seite der befestigungsflanschzugewandten Seite des Scheibenumgriffs (2) unterhalb von Trägerhörnern (7a, 7b) im Bereich der Befestigungsstellen (15a, 15b) angeordnet sind.

14. Bremsträger (1) nach einem der vorgenannten Ansprüchen, **dadurch gekennzeichnet, dass** der Bremsträger (1) einen oder mehrere Durchbrüche (18a, 18b) aufweist.

15. Bremsträger (1) nach Anspruch 14, **dadurch gekennzeichnet, dass** die Grundfläche (5) sowie die Verstärkungsrippe (11) im Bereich der Trägerhörner (6a, 6b) auf der befestigungsflanschabgewandten Seite des Bremsträgers (1) jeweils einen der Durchbrüche (18a, 18b) aufweist.

16. Bremsträger (1) nach Anspruch 15, **dadurch gekennzeichnet, dass** die beiden Durchbrüche (18a, 18b) spiegelsymmetrisch zu der Symmetrieebene "S" angeordnet sind.

17. Bremsträger (1) nach einem der vorgenannten Ansprüche, **dadurch gekennzeichnet, dass** eine lichte Weite "W₁" eines Bremsbelagschachtes, der von befestigungsflanschabgewandt angeordneten Trägerhörnern (6a, 6b) gebildet ist, größer ist als eine lichte Weite "W₂" eines Bremsbelagschachtes, der von befestigungsflanschzugewandt angeordneten Trägerhörnern (7a, 7b) gebildet ist.

18. Bremsträger (1) nach nach einem der vorgenannten Ansprüche, **dadurch gekennzeichnet, dass** zumindest eine der zueinander parallelen Brückenstreben (21a, 21b) mit zumindest einer um einen Winkel (α, β) gekippten Seite versehen ist.

19. Bremsträger (1) nach Anspruch 18, **dadurch gekennzeichnet, dass** die befestigungsflanschzugewandte Brückenstrebe (21b) mit der zumindest einen um einen Winkel (α, β) gekippten Seite versehen ist.

20. Bremsträger (1) nach Anspruch 19, **dadurch gekennzeichnet, dass** eine Oberseite (217) der befestigungsflanschzugewandten Brückenstrebe (21b) in einem Winkel (α(xᵢ)) zu einer gedachten waagerechten Ebene, welche parallel zu einer Ebene des Scheibenumgriffs (2) liegt, gekippt ist.

21. Bremsträger (1) nach Anspruch 20 oder 21, **dadurch gekennzeichnet, dass** eine Unterseite (218) der befestigungsflanschzugewandten Brückenstrebe (21b) in einem Winkel (β(xᵢ)) zu einer gedachten waagerechten Ebene, welche parallel zu einer Ebene des Scheibenumgriffs (2) liegt, gekippt ist, wobei der Winkel vorzugsweise einen Wert aufweist, welcher in einem Bereich von etwa 1° bis 20°, bevorzugt 5° bis 12° liegt.

22. Bremsträger (1) nach Anspruch 20 oder 21, **dadurch gekennzeichnet, dass** ein Wert des Winkels (α(xᵢ), β(xᵢ)) über die Länge der befestigungsflanschzugewandten Brückenstrebe (21b) veränderlich ist.

23. Bremsträger (1) nach einem der Ansprüche 19 bis 22, **dadurch gekennzeichnet, dass** zumindest eine der zueinander parallelen Brückenstreben (21a, 21b) zumindest eine Einschnürung (216a) aufweist.

24. Scheibenbremse (4) eines Fahrzeugs, aufweisend einen Bremsträger (1) nach einem der vorgenannten Ansprüche.

## Claims

1. An integral brake carrier (1) for a vehicle disc brake (4) having a brake disc (3) with the following features:
a) a frame-like disc-encompassing portion (2),
a1) that has two mutually parallel bridge struts (21a, 21b),
a2) and two frame portions (22a, 22b) that are arranged parallel to a brake-disc axis of rotation (19) and connect the bridge struts (21a, 21b),
b) a fastening flange (20) at which the brake carrier (1) can be fastened to an axle flange of a vehicle axle,
c) starting from a side of the disc-encompassing portion (2) facing away from the fastening flange, the two frame portions (22a, 22b) each widen out as far as an outer edge (12) of the fastening flange of the brake carrier (1) such that the widening takes the form of an increase in distance in relation to a plane of the disc-encompassing portion (2),
**characterised in that**
d) there is formed in each case, starting from the side of the disc-encompassing portion (2) facing away from the fastening flange as far as an outer edge (12) of the fastening flange (20) of the brake carrier (1), a geometrical element (13, 13'), this geometrical element (13) being triangular, the side of the frame portion (22a, 22b) facing the fastening flange in each case forming a shortest side of the triangular geometrical element (13), or the geometrical element (13') being trapezoidal, the side of the frame portion (22a, 22b) facing the fastening flange in each case forming a long base side of the trapezoidal geometrical element (13').

2. A brake carrier (1) according to any one of the preceding claims, **characterised in that** one or both of the frame portions (22a, 22b) has/have a lower edge (25) that runs in a straight line without steps.

3. A brake carrier (1) according to any one of the preceding claims, **characterised in that** in each case the brake carrier (1) has two carrier horns (6a, 6b) on a side of the brake carrier (1) facing away from the fastening flange and two carrier horns (7a, 7b) on a side of the brake carrier (1) facing the fastening flange.

4. A brake carrier (1) according to claim 3, **characterised in that** the carrier horns (7a, 7b) arranged facing the fastening flange are higher than the carrier horns (6a, 6b) arranged facing away from the fastening flange.

5. A brake carrier (1) according to claim 3 or 4, **characterised in that** the two carrier horns (7a, 7b) on the side of the brake carrier (1) facing the fastening flange each have an L-shaped cross section.

6. A brake carrier (1) according to claim 5, **characterised in that** both limbs of the L-shaped cross section of the carrier horns (7a, 7b) are thicker in design than the carrier horns (6a, 6b) on the side of the brake carrier (1) facing away from the fastening flange.

7. A brake carrier (1) according to any one of the preceding claims, **characterised in that** on its outer side facing away from the fastening flange the brake carrier (1) has a reinforcing rib (11) comprising a central, curved rib portion (11a) and two rib portions (11b, 11c) that run in a straight line, and a closed contour line.

8. A brake carrier (1) according to claim 7, **characterised in that** the contour line of the reinforcing rib (11) starts at either end on the frame portion (22a, 22b) of the brake carrier (1) with a rib portion (11b, 11c) that runs in a straight line, then runs in parallel under a plane or in the plane of a base surface (5) of the disc-encompassing portion (2), then follows the side of the bridge strut (21b) facing away from the fastening flange, i.e. its outer side, with a central rib portion (11a) and then runs as far as a plane of symmetry "S" of the brake carrier (1).

9. A brake carrier (1) according to claim 8, **characterised in that** the central, curved rib portion (11a) of the reinforcing rib (11) extends between the sides of the disc-encompassing portion (2) facing the carrier horns (6a, 6b) in the region of an axle-spanning portion in an arc-shaped manner, in particular in a circular-arc-shaped manner,.

10. A brake carrier (1) according to claim 9, **characterised in that** the reinforcing rib (11) is formed mirror-symmetrically in relation to the plane of symmetry "S".

11. A brake carrier (1) according to any one of claims 8 to 10, **characterised in that** the reinforcing rib (11) is positioned in such a manner that it is arranged above fastening points (14a, 14b) or (15a, 15b) of the brake carrier (1).

12. A brake carrier (1) according to any one of the preceding claims, **characterised in that** the brake carrier (1) has pockets (17a, 17b).

13. A brake carrier (1) according to claim 12, **characterised in that** the pockets (17a, 17b) are arranged in the region of the fastening points (15a, 15b) below carrier horns (7a, 7b) on the brake-disc-facing side of the side of the disc-encompassing portion (2) that faces the fastening flange.

14. A brake carrier (1) according to any one of the preceding claims, **characterised in that** the brake carrier (1) has one or more apertures (18a, 18b).

15. A brake carrier (1) according to claim 14, **characterised in that** the base surface (5) and the reinforcing rib (11) each have one of the apertures (18a, 18b) on the side of the brake carrier (1) facing away from the fastening flange in the region of the carrier horns (6a, 6b).

16. A brake carrier (1) according to claim 15, **characterised in that** the two apertures (18a, 18b) are arranged mirror-symmetrically in relation to the plane of symmetry "S".

17. A brake carrier (1) according to any one of the preceding claims, **characterised in that** a clear width "W₁" of a brake pad slot formed by carrier horns (6a, 6b) arranged facing away from the fastening flange is greater than a clear width "W₂" of a brake pad slot formed by carrier horns (7a, 7b) arranged facing the fastening flange.

18. A brake carrier (1) according to any one of the preceding claims, **characterised in that** at least one of the mutually parallel bridge struts (21a, 21b) is provided with at least one side that is tilted at an angle (α, β).

19. A brake carrier (1) according to claim 18, **characterised in that** the bridge strut (21b) facing the fastening flange is provided with the at least one side that is tilted at an angle (α, β).

20. A brake carrier (1) according to claim 19, **characterised in that** an upper side (217) of the bridge strut (21b) facing the fastening flange is tilted at an angle (α(xᵢ)) to a notional horizontal plane that lies parallel to a plane of the disc-encompassing portion (2).

21. A brake carrier (1) according to claim 20, **characterised in that** a lower side (218) of the bridge strut (21b) facing the fastening flange is tilted at an angle (β(xᵢ)) to a notional horizontal plane that lies parallel to a plane of the disc-encompassing portion (2), the angle preferably having a value lying in a range of approx. 1° to 20°, preferably 5° to 12°.

22. A brake carrier (1) according to claim 20 or 21, **characterised in that** a value of the angle (α(xᵢ), β(xᵢ)) is variable over the length of the bridge strut (21b) facing the fastening flange.

23. A brake carrier (1) according to any one of claims 19 to 22, **characterised in that** at least one of the mutually parallel bridge struts (21a, 21b) has at least one constricted portion (216a).

24. A disc brake (4) of a vehicle, having a brake carrier (1) according to any one of the preceding claims.

## Revendications

1. Flasque (1) de frein d'une seule pièce d'un frein (4) à disque d'un véhicule, qui a un disque (3) de frein, comprenant les caractéristiques suivantes :
a) une enveloppe (2) de disque de type en cadre,
a1) qui a deux pontets (21a, 21b) parallèles,
a2) ainsi que deux parties (22a, 22b) de cadre qui sont parallèles à un axe (19) de rotation d'un disque de frein et qui relient les pontets (21a, 21b),
b) une bride (20) de fixation, à laquelle le flasque (1) de frein peut être fixé à un collet d'essieu du véhicule,
c) dans lequel deux des parties (22a, 22b) du cadre s'élargissent à partir d'un côté loin de la bride de fixation de l'enveloppe (2) du disque, respectivement, jusqu'à un bord (12) extérieur de la bride de fixation du flasque (1) de frein, de manière à ce que l'élargissement soit constitué, respectivement, sous la forme d'un agrandissement de distance par rapport à un plan de l'enveloppe (2) du disque,
**caractérisé en ce que**
d) respectivement, à partir du côté loin de la bride de fixation de l'enveloppe (2) du disque, un élément (13, 13') de géométrie est formé jusqu'à un bord (12) extérieur de la bride (20) de fixation du flasque (1) de frein, l'élément (13) de géométrie étant triangulaire, le côté tourné vers la bride de fixation de la partie (22a, 22b) du cadre formant, respectivement, un côté le plus court de l'élément (13) de géométrie triangulaire ou **en ce que** l'élément (13') de géométrie est trapézoïdal, le côté tourné vers la bride de fixation de la partie (22a, 22b) du cadre formant, respectivement, un grand côté de base de l'élément (13') de géométrie trapézoïdal.

2. Flasque (1) de frein suivant l'une des revendications précédentes, **caractérisé en ce que** l'une ou les deux des parties (22a, 22b) de cadre a/ont un bord (25) inférieur s'étendant en ligne droite, sans ressaut.

3. Flasque (1) de frein suivant l'une des revendications précédentes, **caractérisé en ce que** le flasque (1) de frein a, respectivement, deux cornes (6a, 6b) de flasque d'un côté loin de la bride de fixation du flasque (1) de frein et, respectivement, deux cornes (7a, 7b) de flasque d'un côté tourné vers la bride de fixation du flasque (1) de frein.

4. Flasque (1) de frein suivant la revendication 3, **caractérisé en ce que** les cornes (7a, 7b) de flasque tournées vers la bride de fixation sont plus hautes que les cornes (6a, 6b) de flasque loin de la bride de fixation.

5. Flasque (1) de frein suivant la revendication 3 ou 4, **caractérisé en ce que** les deux cornes (7a, 7b) de flasque du côté tourné vers la bride de fixation du flasque (1) de frein ont chacune une section transversale en forme de L.

6. Flasque (1) de frein suivant la revendication 5, **caractérisé en ce que** deux branches de la section transversale en forme de L des cornes (7a, 7b) de flasque sont plus épaisses que les cornes (6a, 6b) de flasque du côté loin de la bride de fixation du flasque de frein.

7. Flasque (1) de frein suivant l'une des revendications précédentes, **caractérisé en ce que** le flasque (1) de frein a, sur son côté extérieur loin de la bride de fixation, une nervure (11) de renfort, qui comprend une partie (11a) médiane incurvée et deux parties (11b, 11c) rectilignes, et qui a un contour fermé.

8. Flasque (1) de frein suivant la revendication 7, **caractérisé en ce que** le contour de la nervure (11) de renfort commence, respectivement, à deux extrémités de la partie (22a, 22b) de cadre du flasque (1) de frein par, respectivement, une partie (11b, 11c) de nervure rectiligne, et s'étend, respectivement, d'abord parallèlement sous un plan ou dans le plan d'une surface (5) de base de l'enveloppe (2) de disque et ensuite par la partie (11a) médiane de la nervure, suit le pontet (21b) sur son côté loin de la bride de fixation ou côté extérieur et s'étend jusqu'à un plan « S » de symétrie du flasque (1) de frein.

9. Flasque (1) de frein suivant la revendication 8, **caractérisé en ce que** la partie (11a) incurvée de la nervure (11) de renfort s'étend en forme d'arc, notamment en forme d'arc de cercle, dans la région d'un chevauchement d'essieu, entre les côtés, tournés vers les cornes (6a, 6b) du flasque, de l'enveloppe (2) du disque.

10. Flasque (1) de frein suivant la revendication 9, **caractérisé en ce que** la nervure (11) de renfort est symétrique comme en un miroir par rapport au plan « S » de symétrie.

11. Flasque (1) de frein suivant l'une des revendications 8 à 10, **caractérisé en ce que** la nervure (11) de renfort est placée de manière à être disposée au-dessus des points (14a, 14b) de fixation ou (15a, 15b) du flasque (1) de frein.

12. Flasque (1) de frein suivant l'une des revendications précédentes, **caractérisé en ce que** le flasque (1) de frein a des poches (17a, 17b).

13. Flasque (1) de frein suivant la revendication 12, **caractérisé en ce que** les poches (17a, 17b) sont disposées du côté, tourné vers le disque de frein, du côté tourné vers la bride de fixation de l'enveloppe (2) du disque, en dessous des cornes (7a, 7b) du flasque, dans la région des points (15a, 15b) de fixation.

14. Flasque (1) de frein suivant l'une des revendications précédente, **caractérisé en ce que** le flasque (1) de frein a une ou plusieurs traversées (18a, 18b).

15. Flasque (1) de frein suivant la revendication 14, **caractérisé en ce que** la surface (5) de base, ainsi que la nervure (11) de renfort, ont, dans la région des cornes (6a, 6b) du flasque, du côté loin de la bride de fixation du flasque (1) de frein

16. Flasque (1) de frein suivant la revendication 15, **caractérisé en ce que** les deux traversées (18a, 18b) sont symétriques comme en un miroir par rapport au plan « S » de symétrie.

17. Flasque (1) de frein suivant l'une des revendications précédentes, **caractérisé en ce que** le diamètre « W₁ » intérieur d'un puits de garniture de frein, formé par des cornes (6a, 6b) de flasque loin de la bride de fixation, est plus grand qu'un diamètre « W₂ » intérieur d'un puits de garniture de frein, formé par les cornes (7a, 7b) du flasque tournées vers la bride de fixation.

18. Flasque (1) de frein suivant l'une des revendications précédentes, **caractérisé en ce qu'**au moins l'un des pontets (21a, 21b) parallèles entre eux est pourvu d'au moins un côté incliné d'un certain angle (α, β).

19. Flasque (1) de frein suivant la revendication 18, **caractérisé en ce que** le pontet (21b) tourné vers la bride de fixation est pourvu d'au moins un côté incliné d'un certain angle (α, β).

20. Flasque (1) de frein suivant la revendication 19, **caractérisé en ce qu'**un côté (217) supérieur du pontet (21b) tourné vers la bride de fixation est incliné d'un angle (α(Xᵢ)) par rapport à un plan horizontal imaginaire, parallèle à un plan de l'enveloppe (2) du disque.

21. Flasque (1) de frein suivant la revendication 20 ou 21, **caractérisé en ce qu'**un côté (218) inférieur du pontet (21b) tourné vers la bride de fixation est incliné dans un angle (β (Xᵢ)) par rapport à un plan horizontal imaginaire, parallèle à un plan de l'enveloppe (2) du disque, l'angle ayant de préférence une valeur, qui est dans une plage d'environ 1° à 20°, et de préférence de 5° à 12°.

22. Flasque (1) de frein suivant la revendication 20 ou 21, **caractérisé en ce qu'**une valeur de l'angle (α(Xᵢ), (β(Xᵢ)) se modifie sur la longueur du pontet (21b) tourné vers la bride de fixation.

23. Flasque (1) de frein suivant l'une des revendications 19 à 22, **caractérisé en ce qu'**au moins l'un des pontets (21a, 21b) parallèles entre eux a au moins un resserrement (216a).

24. Frein (4) à disque d'un véhicule, ayant un flasque (1) de frein suivant l'une des revendications précédentes.
